(19) **Europäisches Patentamt / European Patent Office / Office européen des brevets**

(11) **EP 4 683 115 A1**

(12) **EUROPEAN PATENT APPLICATION**
published in accordance with Art. 153(4) EPC

(43) Date of publication:
**21.01.2026 Bulletin 2026/04**

(21) Application number: **24796249.1**

(22) Date of filing: **26.04.2024**

(51) International Patent Classification (IPC):
**H01Q 3/28** (2006.01)    **H01Q 21/30** (2006.01)

(52) Cooperative Patent Classification (CPC):
**H01Q 1/50; H01Q 3/28; H01Q 3/30; H01Q 21/00;
H01Q 21/30**

(86) International application number:
**PCT/CN2024/090085**

(87) International publication number:
**WO 2024/222876 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.04.2023 CN 202310493146**

(71) Applicant: **Huawei Technologies Co., Ltd.
Shenzhen, Guangdong 518129 (CN)**

(72) Inventors:
• **CHEN, Fengwen**
  **Shenzhen, Guangdong 518129 (CN)**
• **ZHANG, Haiwei**
  **Shenzhen, Guangdong 518129 (CN)**
• **TIAN, Xukun**
  **Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **ANTENNA ARRAY FEED NETWORK AND FEED SYSTEM, AND COMMUNICATION DEVICE**

(57) Embodiments of this application provide an antenna array feeding network, a feeding system, and a communication device. The antenna array feeding network includes a power division ratio-adjustable power division component, a first power division component, a second power division component, and a hybrid component. The power division ratio-adjustable power division component outputs two beam vectors, and beam amplitudes of the two beam vectors are adjustable. The first power division component and the second power division component output X first beam signals and Y second beam signals respectively for received signals. The hybrid component mixes the first beam signals and the second beam signals to form an output signal. In this way, a beam width of an antenna array can be adjusted in a large range, the feeding system is simplified, and conventional-technology problems of a complex antenna array feeding system and a limited adjustment range of a beam width that are for making an antenna beam width adjustable are resolved.

FIG. 1

## Description

This application claims priority to Chinese Patent Application No. 202310493146.3, filed with the China National Intellectual Property Administration on April 28, 2023 and entitled "ANTENNA ARRAY FEEDING NETWORK, FEEDING SYSTEM, AND COMMUNICATION DEVICE", which is incorporated herein by reference in its entirety.

## TECHNICAL FIELD

Embodiments of this application relate to the field of communication technologies, and in particular, to an antenna array feeding network, a feeding system, and a communication device.

## BACKGROUND

An antenna is a device that implements an energy conversion function and directionally radiates or receives electromagnetic waves in wireless communication. With development of mobile communication technologies, there are an increasing number of functional requirements for a base station antenna, and higher challenges are posed to a beam adjustment and control capability of the antenna.

Currently, beam adjustment and control of an antenna are mainly implemented by adjusting and controlling an amplitude, a phase, element distribution, and the like of feeding for an antenna array. For example, for a phased array commonly used by a base station antenna, a phase difference between elements is adjusted and controlled by a phase shifter, so that adjustable pointing of an antenna beam can be implemented. A beam width, as an important technical indicator of an antenna, represents coverage of the antenna and is an important factor to be considered during antenna design and network planning. For adjustment and control of the beam width, in the conventional technology, when an amplitude of feeding for an antenna array is adjusted and controlled, an adjustable range of the beam width of the antenna is limited, and a plurality of adjustable power dividers need to be adjusted at the same time, resulting in a complex control manner.

Therefore, how to provide a simple antenna with a large adjustment amplitude of a beam width of the antenna becomes a problem to be resolved urgently.

## SUMMARY

Embodiments of this application provide an antenna array feeding network, a feeding system, and a communication device, so that an antenna beam width can be adjusted in a large range, an antenna array feeding system is simplified, and a conventional-technology problem of a complex antenna array feeding system for making an antenna beam width adjustable is resolved.

A first aspect of this application provides an antenna array feeding network, including: a power division ratio-adjustable power division component, where the power division ratio-adjustable power division component has a first output port, a second output port, and an input port for receiving an input signal, and an amplitude ratio of a signal output from the first output port to a signal output from the second output port is adjustable; a first power division component, where an input end of the first power division component is electrically connected to the first output port, and the first power division component is configured to divide a signal received from the first output port into X first beam signals and transmit the X first beam signals to a hybrid component respectively through X output ports, where X is an integer greater than or equal to 1; a second power division component, where an input end of the second power division component is electrically connected to the second output port, and the second power division component is configured to divide a signal received from the second output port into Y second beam signals and transmit the Y second beam signals to the hybrid component respectively through Y output ports, where Y is also an integer greater than or equal to 1; and the hybrid component, where an input end of the hybrid component is electrically connected to both an output end of the first power division component and an output end of the second power division component, an output end of the hybrid component is configured to be electrically connected to an antenna array, and the hybrid component is configured to at least partially mix the X first beam signals and the Y second beam signals, and output a mixed signal to the antenna array.

According to the antenna array feeding network provided in embodiments of this application, the power division ratio-adjustable power division component can divide an input signal into a first beam component and a second beam component, the two beam components are divided respectively by the first power division component and the second power division component into X first beam signals and Y second beam signals based on an amplitude ratio of elements of a first beam vector A and an amplitude ratio of elements of a second beam vector B, and the hybrid component mixes the X first beam signals and the Y second beam signals to form an output signal. A first beam corresponding to the first beam vector A can define the narrowest beam of an antenna, and a second beam corresponding to the second beam vector B defines performance of a wide beam. An amplitude ratio of the first beam vector A to the second beam vector B is changed by using the power division ratio-adjustable power division component at a first stage, so that an amplitude ratio of a signal output from the first output port to a signal output from the second output port is adjustable, and proportions of the two finally output beam vectors are adjustable. After the hybrid component mixes the first beam signals and the second beam signals, a beam width of an antenna can be adjusted in a large range by adjusting and controlling mixed proportions of the first beam signals and the second beam signals. Therefore, according to the antenna array feeding network provided in embodiments of this application, the beam width of the antenna can be adjusted in a large range, and the feeding network is simplified.

In a possible implementation, the hybrid component is configured to mix the X first beam signals and the Y second beam signals, and output N output signals, where N is a quantity of elements of the antenna array, and $N \geq 2$;

when N is an even number, X, Y, and N meet the following formula:

$$X = Y = N/2;$$

when N is an odd number, X, Y, and N meet the following formulas:

$$X = (N + 1)/2;$$

$$Y = (N - 1)/2.$$

In a possible implementation, the hybrid component includes at least one 180° bridge, and each 180° bridge has a sum input port and a difference input port; and at least some of the X first beam signals are separately connected to the sum input port of the at least one 180° bridge, and the Y second beam signals are separately connected to the difference input port of the at least one 180° bridge.

In a possible implementation, N is an even number, and the hybrid component includes N/2 180° bridges disposed in parallel; and the X first beam signals are respectively connected to sum input ports of the N/2 180° bridges, and the Y second beam signals are respectively connected to difference input ports of the N/2 180° bridges.

In a possible implementation, N is an odd number, the hybrid component includes a phase compensator and (N-1)/2 180° bridges disposed in parallel, and the phase compensator and the 180° bridges are disposed in parallel; an input end of the phase compensator is electrically connected to one of the output ports of the first power division component, an output end of the phase compensator is electrically connected to one radiating element in the antenna array, and the phase compensator is configured to perform phase compensation on one of the X first beam signals and output the first beam signal to the radiating element; and remaining (N-1)/2 signals of the X first beam signals are respectively connected to sum input ports of the (N-1)/2 180° bridges, and the Y second beam signals are respectively connected to difference input ports of the (N-1)/2 180° bridges.

In a possible implementation, the power division ratio-adjustable power division component is configured to divide the input signal into a first beam component and a second beam component, the first output port is configured to output the first beam component, and the second output port is configured to output the second beam component; and a signal amplitude ratio of the first beam component to the second beam component meets the following formula:

$$|A|:|K \times B|,$$

where
K is an amplitude ratio regulation factor of the power division ratio-adjustable power division component, K is greater than or equal to 0, A is a first beam vector, and B is a second beam vector; and |A| is a signal amplitude of the first beam vector, and |B| is a signal amplitude of the second beam vector.

In a possible implementation, the first power division component is a fixed power divider with a fixed amplitude ratio regulation factor;

when N is an odd number, the first beam vector $A = [A_0, \ \sqrt{2}A_1, \ \sqrt{2}A_2, \ ..., \ \sqrt{2}A_{\frac{N-1}{2}}]$, and an amplitude ratio of the X first beam signals is $A_0:\sqrt{2}A_1:\sqrt{2}A_2:...:\sqrt{2}A_{\frac{N-1}{2}}$; when N is an even number, the first beam vector

$A = [\sqrt{2}A_1, \ \sqrt{2}A_2, \ ..., \ \sqrt{2}A_{\frac{N}{2}}]$, and an amplitude ratio of the X first beam signals is

$$\sqrt{2}A_1:\sqrt{2}A_2:...:\sqrt{2}A_{\frac{N}{2}}; \text{ and } A_0, \ A_1, \ A_2, \ ..., \ A_{\frac{N-1}{2}}, \text{ and } A_{\frac{N}{2}}$$ are elements of the first beam vector. In this way, a quantity of control units for controlling the first power division component is reduced, thereby simplifying adjustment and control.

In a possible implementation, the first power division component is a power divider with an adjustable amplitude ratio regulation factor; and the first power division component includes one or more power dividers, and the one or more power dividers are all adjustable power dividers. In this way, adjustment and control are more refined.

In a possible implementation, the second power division component is a fixed power divider with a fixed amplitude ratio regulation factor;

when N is an odd number, the second beam vector $\mathrm{B} = [\sqrt{2}B_1, \ \sqrt{2}B_2, \ ..., \ \sqrt{2}B_{\frac{N-1}{2}}]$, and an amplitude ratio of the Y second beam signals is $\sqrt{2}K \times B_1:\sqrt{2}K \times B_2:...:\sqrt{2}K \times B_{\frac{N-1}{2}}$ ;

when N is an even number, the second beam vector $\mathrm{B} = [\sqrt{2}B_1, \ \sqrt{2}B_2, \ ..., \ \sqrt{2}B_{\frac{N}{2}}]$, and an amplitude ratio of the Y second beam signals is $\sqrt{2}K \times B_1:\sqrt{2}K \times B_2:...:\sqrt{2}K \times B_{\frac{N}{2}}$ ; and

$B_1, \ B_2, \ ..., \ B_{\frac{N-1}{2}}$ , and $B_{\frac{N}{2}}$ are elements of the second beam vector.

In a possible implementation, the second power division component is a power divider with an adjustable amplitude ratio regulation factor; and
the second power division component includes one or more power dividers, and the one or more power dividers are all adjustable power dividers.

In a possible implementation, when N is an odd number, an amplitude ratio of the N output signals is

$$A_0:(A_1 + K \times B_1):(A_1 - K \times B_1):...:(A_{\frac{N-1}{2}} + K \times B_{\frac{N-1}{2}}):(A_1 + A_{\frac{N-1}{2}} - K \times \ B_{\frac{N-1}{2}}) \text{ ; or}$$

when N is an even number, an amplitude ratio of the N output signals is

$$(A_1 + \ K \times B_1):(A_1 - K \times B_1):...:(A_{\frac{N}{2}} + K \times B_{\frac{N}{2}}):(A_{\frac{N}{2}} - K \times B_{\frac{N}{2}}) \ .$$

In a possible implementation, the power division ratio-adjustable power division component includes a power divider, an adjustable phase shifter, and a 90° bridge;

one output port of the power divider is connected to one input port of the 90° bridge; and
the other output port of the power divider is connected to an input port of the adjustable phase shifter, and an output port of the adjustable phase shifter is connected to the other input port of the 90° bridge.

In a possible implementation, the power division ratio-adjustable power division component includes a power divider, a 90° phase shifter, an adjustable phase shifter, and a 90° bridge;

one output port of the power divider is connected to one input port of the 90° bridge; and
the other output port of the power divider is connected to an input port of the 90° phase shifter, an output port of the 90° phase shifter is connected to an input port of the adjustable phase shifter, and an output port of the adjustable phase shifter is connected to the other input port of the 90° bridge.

In a possible implementation, the power division ratio-adjustable power division component includes two 90° bridges and an adjustable phase shifter;

one output port of one 90° bridge of the two 90° bridges is connected to one input port of the other 90° bridge of the two 90° bridges; and
the other output port of the one 90° bridge is connected to the other input port of the other 90° bridge by the adjustable phase shifter.

In a possible implementation, the power division ratio-adjustable power division component includes a first circuit board and a slidable second circuit board that are stacked, a first metal layer is disposed on the first circuit board, an end of the first metal layer has the input port, the first output port and the second output port that are connected in parallel are formed on the first metal layer, an end at which the first output port is provided on the first metal layer has a first coupling gap, and an end at which the second output port is provided on the first metal layer has a second coupling gap;

a second metal layer and a third metal layer are disposed on a surface that is of the second circuit board and that faces the first metal layer; and

when the second circuit board slides toward the first output port, the second metal layer corresponds to the first coupling gap, and the third metal layer corresponds to the second coupling gap.

In a possible implementation, the third metal layer includes a plurality of first strip lines with different widths, and the second metal layer includes a plurality of second strip lines with different widths.

A second aspect of embodiments of this application provides a feeding system, including a first-stage feeding network, where the foregoing antenna array feeding network is used as the first-stage feeding network; and an output end of the first-stage feeding network is configured to be electrically connected to a corresponding radiating element in an antenna array.

In a possible implementation, the feeding system further includes a plurality of second-stage feeding networks, where the foregoing antenna array feeding network is used as each second-stage feeding network;

the plurality of second-stage feeding networks are disposed in parallel, and each second-stage feeding network and the first-stage feeding network are connected in series;

an output end of the second-stage feeding network is configured to be electrically connected to a corresponding radiating element in the antenna array; and

a quantity of output signals output by the first-stage feeding network is the same as a quantity of rows of the antenna array, and a quantity of output signals output by each second-stage feeding network is the same as a quantity of columns of the antenna array.

In a possible implementation, the quantity of output signals output by the first-stage feeding network is the same as a quantity of the second-stage feeding networks, and an input end of each second-stage feeding network is in a communication connection with one output signal of the first-stage feeding network.

In a possible implementation, an amplitude ratio regulation factor of a power division ratio-adjustable power division component in the first-stage feeding network is the same as an amplitude ratio regulation factor of a power division ratio-adjustable power division component in the second-stage feeding network, or an amplitude ratio regulation factor of a power division ratio-adjustable power division component in the first-stage feeding network is different from an amplitude ratio regulation factor of a power division ratio-adjustable power division component in the second-stage feeding network.

A third aspect of embodiments of this application provides a communication device, including an antenna device and a radio frequency module, where the radio frequency module is connected to the antenna device by a transmission line; and the antenna device includes an antenna array and the foregoing feeding system, an input end of the feeding system is electrically connected to the radio frequency module by a transmission line, and an output end of the feeding system is electrically connected to each radiating element in the antenna array.

In a possible implementation, when the antenna array is a linear array, the output end of the first-stage feeding network in the feeding system is electrically connected to each radiating element in the antenna array.

In a possible implementation, when the antenna array is a rectangular array, the first-stage feeding network of the feeding system and each second-stage feeding network are connected in series; and the output end of each second-stage feeding network is electrically connected to each radiating element in the antenna array.

**BRIEF DESCRIPTION OF DRAWINGS**

FIG. 1 is a diagram of an antenna array feeding network according to an embodiment of this application;

FIG. 2 is a diagram of a structure of an antenna array feeding network corresponding to a case in which N is an odd number according to an embodiment of this application;

FIG. 3 shows an antenna array with five elements according to an embodiment of this application;

FIG. 4 is a diagram of a structure of an antenna array feeding network corresponding to a case in which N = 5 according to an embodiment of this application;

FIG. 5 is a diagram of a structure of an antenna array feeding network corresponding to a case in which N is an even number according to an embodiment of this application;

FIG. 6 shows an antenna array with six elements according to an embodiment of this application;

FIG. 7 is a diagram of a structure of an antenna array feeding network corresponding to a case in which N = 6 according to an embodiment of this application;

FIG. 8 is a diagram of a structure of a power division ratio-adjustable power division component in an antenna array feeding network according to an embodiment of this application;

FIG. 9 is a diagram of another structure of a power division ratio-adjustable power division component in an antenna array feeding network according to an embodiment of this application;

FIG. 10 is a diagram of still another structure of a power division ratio-adjustable power division component in an antenna array feeding network according to an embodiment of this application;

FIG. 11 is a diagram of another structure of a power division ratio-adjustable power division component being a dispersion-type power division ratio-adjustable power division component according to an embodiment of this application;

FIG. 12 is a diagram of still another structure of a power division ratio-adjustable power division component being a dispersion-type power division ratio-adjustable power division component according to an embodiment of this application;

FIG. 13 is a diagram of simulation of an antenna at 1.7 GHz by using an antenna array feeding network according to an embodiment of this application;

FIG. 14 is a diagram of simulation of an antenna at 2.2 GHz by using an antenna array feeding network according to an embodiment of this application;

FIG. 15 is a diagram of simulation of an antenna at 2.7 GHz by using an antenna array feeding network according to an embodiment of this application;

FIG. 16 is a diagram of yet still another structure of a power division ratio-adjustable power division component in an antenna array feeding network according to an embodiment of this application;

FIG. 17 is a diagram of metal layers in the structure shown in FIG. 16;

FIG. 18 is a diagram of another structure of an antenna array feeding network according to an embodiment of this application;

FIG. 19 is a diagram of a structure of another antenna array feeding network corresponding to a case in which N is an odd number according to an embodiment of this application;

FIG. 20 is a diagram of a structure of another antenna array feeding network corresponding to a case in which N = 5 according to an embodiment of this application;

FIG. 21 shows an antenna array with seven elements according to an embodiment of this application;

FIG. 22 is a diagram of a structure of another antenna array feeding network corresponding to a case in which N = 7 according to an embodiment of this application;

FIG. 23 is a diagram of a structure of another antenna array feeding network corresponding to a case in which N is an odd number according to an embodiment of this application;

FIG. 24 shows an antenna array with eight elements according to an embodiment of this application;

FIG. 25 is a diagram of a structure of another antenna array feeding network corresponding to a case in which N = 8 according to an embodiment of this application;

FIG. 26 is a diagram of a structure of a feeding system according to an embodiment of this application;

FIG. 27 is a diagram of another structure of a feeding system according to an embodiment of this application;

FIG. 28 is a diagram of distribution of a $5\times5$ antenna array according to an embodiment of this application;

FIG. 29 is a diagram of a structure of a feeding system corresponding to a $5\times5$ antenna array according to an embodiment of this application;

FIG. 30 is a diagram of distribution of a $5\times4$ antenna array according to an embodiment of this application;

FIG. 31 is a diagram of a structure of a feeding system corresponding to a $5\times4$ antenna array according to an embodiment of this application;

FIG. 32 is a diagram of distribution of a $4\times4$ antenna array according to an embodiment of this application;

FIG. 33 is a diagram of a structure of a feeding system corresponding to a $5\times4$ antenna array according to an embodiment of this application;

FIG. 34 is a diagram of distribution of a $4\times5$ antenna array according to an embodiment of this application; and

FIG. 35 is a diagram of a structure of a feeding system corresponding to a $4\times5$ antenna array according to an embodiment of this application.

Reference numerals:

100: antenna array feeding network;

111: power division ratio-adjustable power division component; 111e: third metal layer; 111c: second metal layer; 111f: first coupling gap; 111g: second coupling gap; 111d: first metal layer; 111b: first circuit board; 111a: second circuit board;

121: first power division component; 122: second power division component; 1211: first power division component; 1212: third power divider; 1221: second power division component; 1213: fourth power divider; 1222: fifth power divider; 1223: sixth power divider; 1111 and 1114: 90° bridge; 1112: adjustable phase shifter; 113: 90° phase shifter; 1115: power divider; 1116: power division-phase structure;

131: hybrid component; 1311: phase compensator; 1332: 180° bridge;

200: antenna array.

## DESCRIPTION OF EMBODIMENTS

A beam width, as an important technical indicator of an antenna, represents coverage of the antenna and is an important factor to be considered during antenna design and network planning.

In the conventional technology, an amplitude of feeding for an antenna array is adjusted and controlled. However, a plurality of stages of power dividers are usually cascaded for adjusting and controlling the feeding amplitude, and the power divider at each stage usually needs to be controlled separately. Consequently, an entire feeding system is complex. In addition, when the amplitude of feeding for the antenna array is adjusted and controlled, an adjustable range of the beam width of the antenna is limited.

Therefore, to resolve the foregoing problem, embodiments of this application provide an antenna array feeding network including a power division ratio-adjustable power division component. The power division ratio-adjustable power division component can divide an input signal into a first beam component and a second beam component, the two beam components are divided respectively by a first power division component and a second power division component into X first beam signals and Y second beam signals based on an amplitude ratio of elements of a first beam vector A and an amplitude ratio of elements of a second beam vector B, and a hybrid component mixes the X first beam signals and the Y second beam signals to form an output signal. A first beam corresponding to the first beam vector A can define the narrowest beam of an antenna, and a second beam corresponding to the second beam vector B defines performance of a wide beam. An amplitude ratio of the first beam vector A to the second beam vector B is changed by using the power division ratio-adjustable power division component, so that an amplitude ratio of a signal output from a first output port to a signal output from a second output port is adjustable, and proportions of the two finally output beam vectors are adjustable. After the hybrid component mixes the first beam signals and the second beam signals, a beam width of an antenna can be adjusted in a large range by adjusting and controlling mixed proportions of the first beam signals and the second beam signals. Therefore, according to the antenna array feeding network provided in embodiments of this application, the beam width of the antenna can be adjusted in a large range, and the feeding network is simplified.

The following describes in detail a structure of a linear array feeding network provided in embodiments of this application.

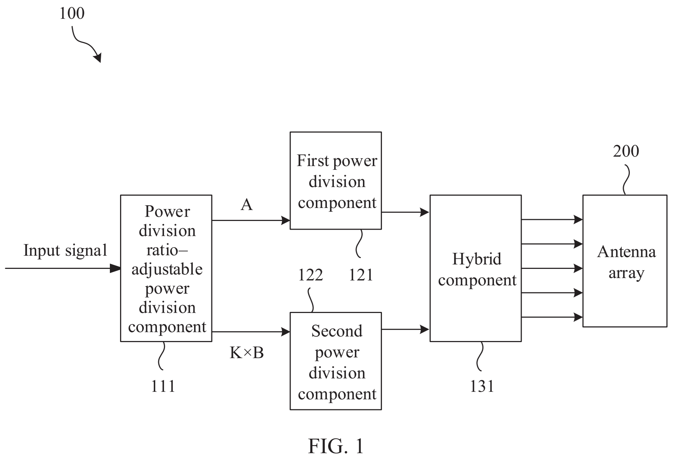

Refer to FIG. 1. An embodiment of this application provides an antenna array feeding network 100. The antenna array feeding network 100 is configured to adjust and control a feeding signal of a radiating element in an antenna array 200, to adjust an antenna array beam width of the radiating element. The antenna array may be a linear array in which a plurality of radiating elements are arranged into one row and a plurality of columns or into one column and a plurality of rows, or may be a rectangular array in which a plurality of radiating elements are arranged into a plurality of rows and a plurality of columns.

In an embodiment of this application, as shown in FIG. 1, a power division ratio-adjustable power division component 111 is included. The power division ratio-adjustable power division component 111 has a first output port (not shown), a second output port (not shown), and an input port (not shown) for receiving an input signal. The first output port and the second output port are configured to output two signals. For example, the first output port is configured to output a signal corresponding to a beam vector (for example, a first beam vector), and the second output port is configured to output a signal corresponding to another beam vector (for example, a second beam vector B). The power division ratio-adjustable power division component 111 is a power division unit with an adjustable amplitude ratio regulation factor. Therefore, in an embodiment of this application, an amplitude ratio of a signal output from the first output port to a signal output from the second output port is adjustable.

The power division ratio-adjustable power division component 111 may divide an input signal into two parts: a first beam vector A and a second beam vector B. In addition, to make a beam width adjustable, an amplitude ratio of elements in the first beam vector A and an amplitude ratio of elements in the second beam vector B are adjusted. For example, an amplitude ratio of a signal output from the first output port to a signal output from the second output port of the power division ratio-adjustable power division component 111 is $|A|:|K \times B|$, where K is an amplitude ratio regulation factor of the power division ratio-adjustable power division component 111, $K \geq 0$, $|A|$ is a signal amplitude of the first beam vector A, and |B| is a signal amplitude of the second beam vector B. In this way, for example, when K = 1, the amplitude ratio of the signal output from the first output port to the signal output from the second output port is |A|:|B|; or when K = 0.5, the amplitude ratio of the signal output from the first output port to the signal output from the second output port is |A|:|0.5 $\times$ B|.

In an embodiment of this application, the first beam vector A corresponds to the narrowest beam of an antenna, and the second beam vector B corresponds to the widest beam of the antenna. In this case, during third-stage mixing, when a proportion of the second beam vector increases, the beam width may be adjusted. Therefore, mixed proportions of the first beam vector and the second beam vector determine the beam width of the antenna.

It should be noted that, when K = 0, there is only the signal that is output from the first output port and that corresponds to the first beam vector. In this case, the beam of the antenna is the narrowest. As the proportion of the second beam vector increases, for example, K increases, the beam of the antenna gradually becomes wider.

It may be understood that, in an embodiment of this application, a number of K is not limited to 0 or 1. For example, in some examples, the number of K may alternatively be 2, 3, or another integer.

In an embodiment of this application, as shown in FIG. 1, a first power division component 121 and a second power division component 122 that are disposed in parallel are further included. The first power division component 121 is electrically connected to the first output port, and the second power division component 122 is electrically connected to the second output port. In this case, the signal corresponding to the first beam vector A is transmitted to the first power division component 121 through the first output port, and the signal corresponding to the second beam vector B is transmitted to the second power division component 122 through the second output port. The amplitude ratio of the signal output from the first output port to the signal output from the second output port is |A|:|K $\times$ B|.

The first power division component 121 divides a signal received from the first output port into X first beam signals according to the amplitude ratio of the elements in the first beam vector A, and transmits the X first beam signals to a hybrid component respectively through X output ports. The second power division component 122 is configured to divide a signal received from the second output port into Y second beam signals according to the amplitude ratio of the elements in the second beam vector B, and transmit the Y second beam signals to the hybrid component respectively through Y output ports. In this case, the first power division component 121 and the second power division component 122 at a second stage 120 jointly output X+Y beam signals.

It may be understood that amplitudes of the X first beam signals may be different, and amplitudes of the Y second beam signals may be different.

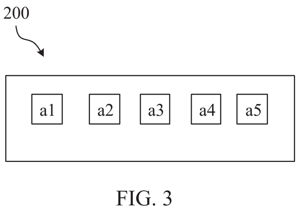

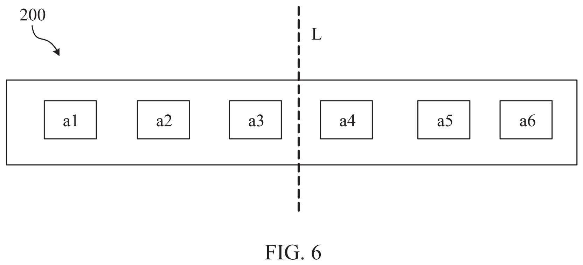

In an embodiment of this application, when N is an even number, X = Y = N/2; or when N is an odd number, X = (N + 1)/2, and Y = (N - 1)/2. For example, in FIG. 3, the antenna array 200 is a linear array, and the antenna array 200 has five radiating elements: a radiating element a1, a radiating element a2, a radiating element a3, a radiating element a4, and a radiating element a5. In this case, N = 5, X = 3, and Y = 2. Alternatively, for example, in FIG. 6, the antenna array 200 has five radiating elements: a radiating element a1, a radiating element a2, a radiating element a3, a radiating element a4, a radiating element a5, and a radiating element a6. In this case, N = 6, X = 3, and Y = 3.

As shown in FIG. 1, in an embodiment of this application, a hybrid component 131 is further included. An input end of the hybrid component 131 is electrically connected to output ends of the first power division component 121 and the second power division component 122. The X first beam signals output by the first power division component 121 are transmitted to the hybrid component 131 respectively through the X output ports. The Y second beam signals output by the second power division component 122 are transmitted to the hybrid component 131 respectively through the Y output ports. In an embodiment of this application, the hybrid component 131 mixes the X first beam signals and the Y second beam signals based on elements at corresponding locations in the first beam vector and the second beam vector, and N formed output signals are a combination of elements at corresponding locations in the first beam vector and the second beam vector. In this way, by adjusting the amplitude ratio of the elements in the first beam vector and in the second beam vector, the antenna array 200 can implement adjustment and control of the beam width of the array antenna in a large range.

The amplitude ratio of the first beam vector A to the second beam vector B is changed by using the power division ratio-adjustable power division component, so that the amplitude ratio of the signal output from the first output port to the signal output from the second output port is adjustable, and proportions of the two finally output beam vectors are adjustable. After the hybrid component mixes the first beam signals and the second beam signals, the beam width of the antenna can be adjusted in a large range by adjusting and controlling the mixed proportions of the first beam signals and the second beam signals. Therefore, according to the antenna array feeding network provided in embodiments of this application, the beam width of the antenna can be adjusted in a large range, and the feeding network is simplified.

In a possible implementation, the hybrid component 131 may mix the X first beam signals and the Y second beam signals through a 180° hybrid network based on elements at corresponding locations in the first beam vector and the second beam vector. The 180° hybrid network is a four-port network with a 180° phase shift between two output ports. The 180° hybrid network may be a ring hybrid network, or may be a gradually changed matching line and a coupling line, or may be a magic T.

In a possible implementation, in an embodiment of this application, for the hybrid component 131 to mix the X first beam signals and the Y second beam signals based on the elements at the corresponding locations in the first beam vector and the second beam vector, the hybrid component 131 includes at least one 180° bridge 1332, and each 180° bridge 1332 has a sum input port and a difference input port; and at least some of the X first beam signals are separately connected to the sum input port of the at least one 180° bridge 1332, and the Y second beam signals are separately connected to the difference input port of the at least one 180° bridge 1332. Each 180° bridge 1332 mixes one first beam signal input from the sum input port and one second beam signal input from the difference input port into two output signals. The two output signals both include the first beam signal and the second beam signal, and phases of the second beam signal included in the two output signals are opposite. For example, an amplitude of one output signal is an amplitude of the first beam signal plus an amplitude of the second beam signal, and an amplitude of the other output signal is the amplitude of the first beam signal minus the amplitude of the second beam signal.

It may be understood that the 180° bridge is an existing device and may include four variable resistors. Resistance values of the four resistors may be adjusted to change performance of a circuit. When a voltage in the circuit changes, the 180° bridge adjusts the resistance value of the resistor to keep output signals of the circuit at a 180° phase difference.

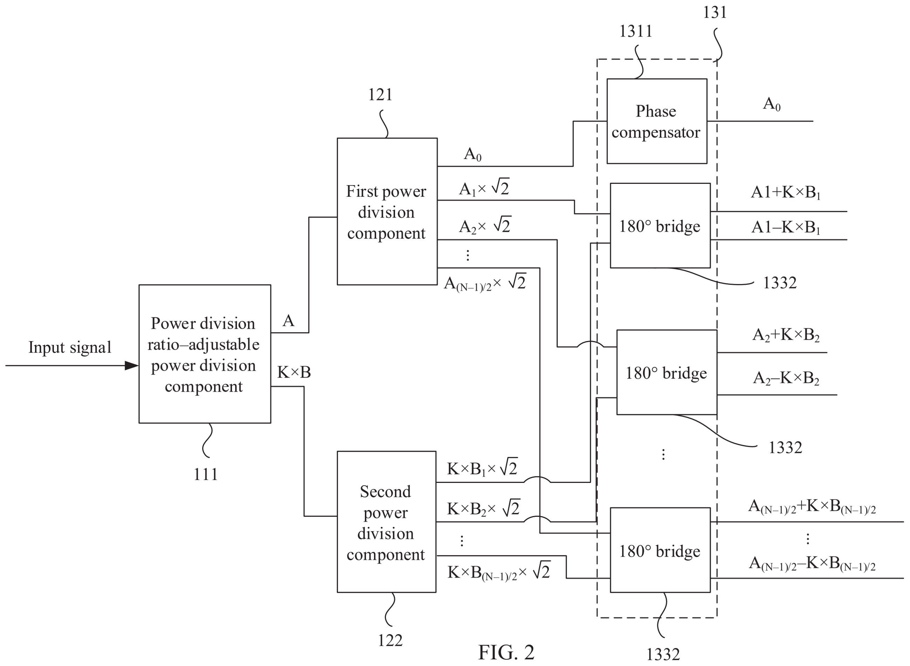

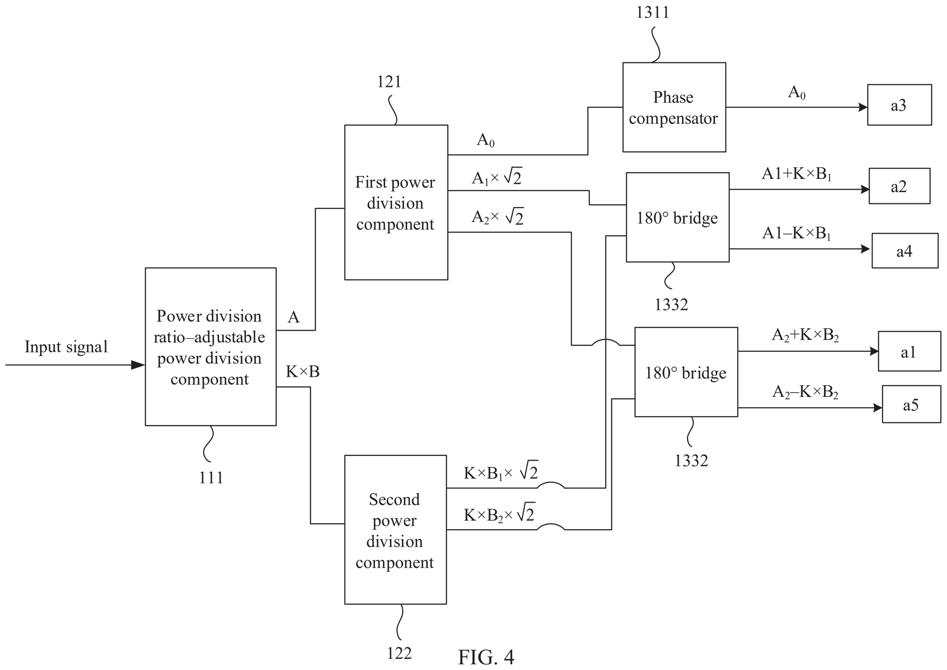

In a possible implementation, as shown in FIG. 2, when N is an odd number, the hybrid component includes a phase compensator 1311 and (N-1)/2 180° bridges 1332 disposed in parallel, and the phase compensator 1311 and the 180° bridges 1332 are disposed in parallel; the phase compensator 1311 is electrically connected to the first power division component, the phase compensator 1311 is configured to perform phase compensation on one of the X first beam signals (for example, a signal formed after power division of an element at a location with no corresponding location in the second beam vector B), (N-1)/2 signals of the X first beam signals are respectively connected to sum input ports of the (N-1)/2 180° bridges 1332, and the Y second beam signals are respectively connected to difference input ports of the (N-1)/2 180° bridges 1332. For example, as shown in FIG. 4, N = 5, X = 3, and Y = 2. In this case, the hybrid component includes a phase compensator 1311 and two 180° bridges 1332. Two first beam signals of three first beam signals correspond to two second beam signals. Therefore, a first beam signal and a second beam signal that correspond to each other are input respectively to a sum input port and a difference input port of one 180° bridge 1332, a first beam signal and a second beam signal that correspond to each other in another group are input respectively to a sum input port and a difference input port of the other 180° bridge 1332, the remaining first beam signal is transmitted to the phase compensator 1311, and the phase compensator 1311 performs phase compensation on the first beam signal machine.

It may be understood that the phase compensator 1311 may be implemented by using any one of a phase shifter, a transmission line, a filter, and the like.

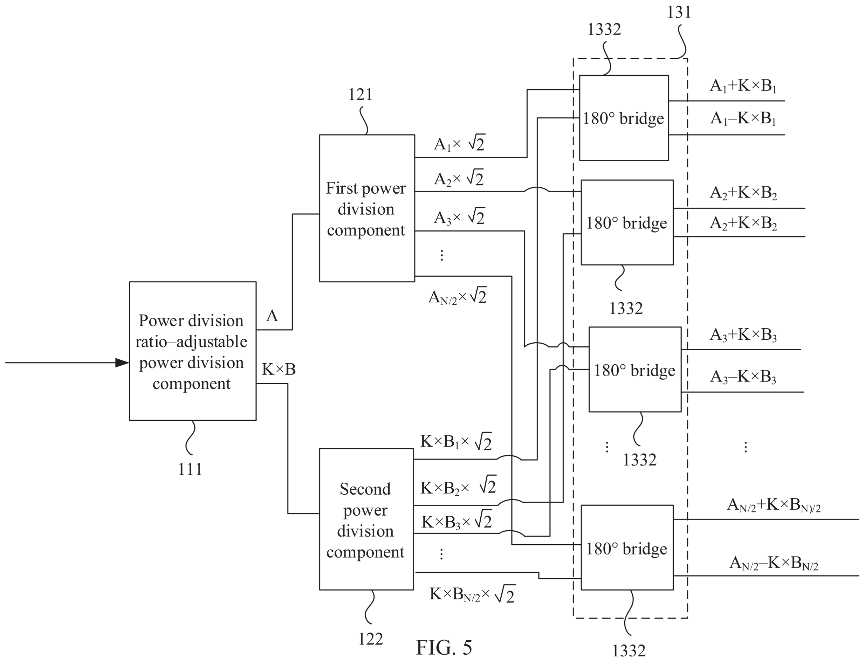

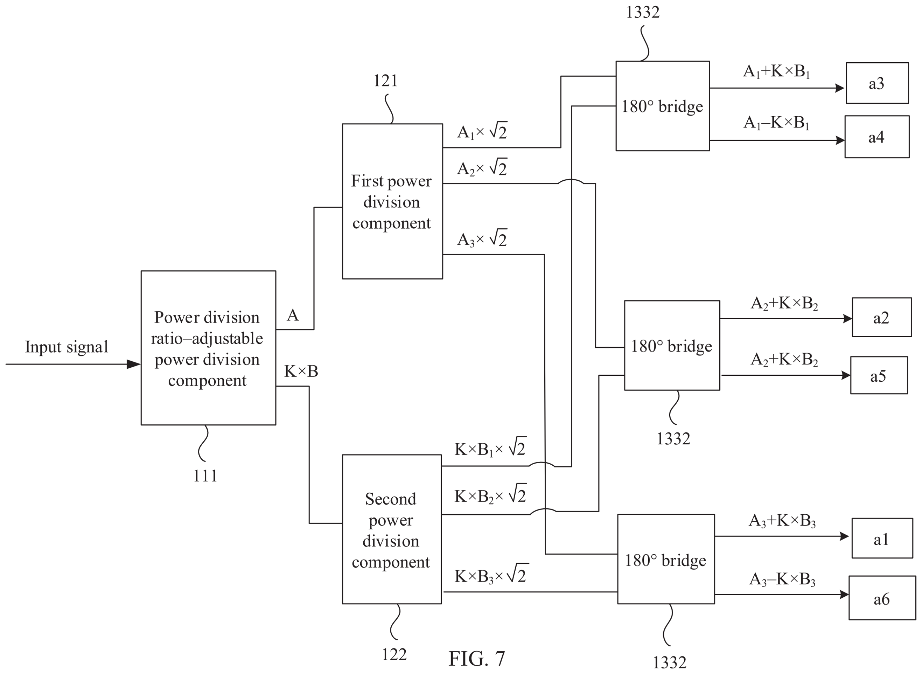

In a possible implementation, as shown in FIG. 5, when N is an even number, the hybrid component includes N/2 180° bridges 1332 disposed in parallel; and the X first beam signals are respectively connected to sum input ports of the N/2 180° bridges 1332, and the Y second beam signals are respectively connected to difference input ports of the N/2 180° bridges 1332. For example, as shown in FIG. 6 and FIG. 7, N = 6, and then X = 3 and Y = 3. The hybrid component includes three 180° bridges 1332 disposed in parallel, three first beam signals are output respectively to sum input ports of the three 180° bridges 1332, and three second beam signals are output respectively to difference input ports of the three 180° bridges 1332. Each 180° bridge 1332 mixes the second beam signal of the first beam signal to form two output signals. An amplitude of one output signal is an amplitude of the first beam signal plus an amplitude of the second beam signal, and an amplitude of the other output signal is the amplitude of the first beam signal minus the amplitude of the second beam signal. Finally, six output signals are output.

In an embodiment of this application, both the first power division component 121 and the second power division component 122 may be fixed power dividers with fixed amplitude ratio regulation factors. In this way, when a control unit is provided, the first power division component and the second power division component do not need to be separately controlled, thereby simplifying a control manner.

In an embodiment of this application, in a case that both the first power division component and the second power division component may be fixed power dividers with fixed amplitude ratio regulation factors, when N is an odd number, the first beam vector $A = [A_0, \ \sqrt{2}A_1, \ \ \sqrt{2}A_2, \ ..., \ \sqrt{2}A_{\frac{N-1}{2}}]$ , as shown in FIG. 3, an amplitude ratio of the X first beam signals is $A_0 : \sqrt{2}A_1 : \sqrt{2}A_2 : ... : \sqrt{2}A_{\frac{N-1}{2}}$, where $A_0, \ A_1, \ A_2, \ ..., \ A_{\frac{N-1}{2}}$, and $A_{\frac{N}{2}}$ are elements of the first beam vector A.

When N is an odd number, the second beam vector $B = [\sqrt{2}B_1, \ \sqrt{2}B_2, \ ..., \ \sqrt{2}B_{\frac{N-1}{2}}]$, and an amplitude

ratio of the Y second beam signals is $\sqrt{2}K \times B_1 : \sqrt{2}K \times B_2 : ... : \sqrt{2}K \times B_{\frac{N-1}{2}}$, where $B_1$, $B_2$, ..., $B_{\frac{N-1}{2}}$, and

$B_{\frac{N}{2}}$ are elements of the second beam vector B.

As shown in FIG. 2, an amplitude of one of the X first beam signals is $A_0$, the signal is transmitted to the phase compensator 1311, and the remaining (N-1)/2 signals of the X first beam signals are respectively connected to sum input ports of (N-1)/2 180° bridges 1332. The 180° bridge 1332 mixes one first beam signal and one second beam signal based on two elements at corresponding locations in the first beam vector A and the second beam vector B. For example, a location of the element $A_1$ in the first beam vector A corresponds to a location of the element $B_1$ in the second beam vector B. As shown in FIG. 3, a first beam signal with an amplitude of $\sqrt{2}A_1$ and a second beam signal with an amplitude of $\sqrt{2}B_1$ are respectively transmitted to a sum input port and a difference input port of a same 180° bridge 1332, and a first beam signal with an amplitude of $\sqrt{2}A_2$ and a second beam signal with an amplitude of $\sqrt{2}B_2$ are respectively transmitted to a sum input port and a difference input port of another 180° bridge 1332.

As shown in FIG. 2, when N is an odd number, an amplitude ratio of N output signals is

$A_0 : (A_1 + K \times B_1) : (A_1 - K \times B_1) : ... : (A_{\frac{N-1}{2}} + K \times B_{\frac{N-1}{2}}) : (A_1 + A_{\frac{N-1}{2}} - K \times B_{\frac{N-1}{2}})$. Therefore, in

an embodiment of this application, the N output signals are output through mixing of the first beam signals and the second beam signals by the 180° bridge 1332, and through phase compensation on one of the first beam signals by the phase compensator 1311. In this way, amplitudes of the N output signals can be adjusted by adjusting and controlling a value of K, thereby adjusting the beam width of the antenna in a large range.

As shown in FIG. 3, the antenna array 200 is a linear array, the antenna array 200 includes five radiating elements: a radiating element a1, a radiating element a2, a radiating element a3, a radiating element a4, and a radiating element a5, and a center of the antenna array 200 is the radiating element a3. N = 5, X = 3, and Y = 2. As shown in FIG. 4, amplitudes of three first beam signals output by the first power division component 121 are $A_0$, $\sqrt{2}A_1$, and $\sqrt{2}A_2$, and amplitudes of two second beam signals output by the second power division component 122 are $K \times \sqrt{2}B_1$ and $K \times \sqrt{2}B_2$. There are two 180° bridges 1332. Amplitudes of two output signals formed by mixing $\sqrt{2}A_1$ and $K \times \sqrt{2}B_1$ by one 180° bridge 1332 are respectively $A_1 + K \times B_1$ and $A_1 - K \times B_1$, and amplitudes of two output signals formed by mixing $\sqrt{2}A_2$ and $K \times \sqrt{2}B_2$ by the other 180° bridge 1332 are respectively $A_2 + K \times B_2$ and $A_2 - k \times B_2$. The phase compensator 1311 adjusts and controls a phase of $A_0$. Amplitudes of five output signals that are finally output are $A_2 + K \times B_2$, $A_1 + K \times B_1$, $A_0$, $A_1 - K \times B_1$, and $A_2 - K \times B_2$. Locations of the five output signals correspond to locations of the five radiating elements in FIG. 3. For example, as shown in FIG. 4, the output signal with the amplitude of $A_2 + K \times B_2$ is fed into the radiating element a1, the output signal with the amplitude of $A_2 - K \times B_2$ is fed into the radiating element a5, the output signal with the amplitude of $A_1 + K \times B_1$ is fed into the radiating element a2, the output signal with the amplitude of $A_1 - K \times B_1$ is fed into the radiating element a4, and the output signal with the amplitude of $A_0$ is fed into the radiating element a3.

In an embodiment of this application, when N is an even number, the first beam vector

$A = [\sqrt{2}A_1, \sqrt{2}A_2, ..., \sqrt{2}A_{\frac{N}{2}}]$, and an amplitude ratio of the X first beam signals is $\sqrt{2}A_1 : \sqrt{2}A_2 : ... : \sqrt{2}A_{\frac{N}{2}}$.

When N is an even number, the second beam vector $B = [\sqrt{2}B_1, \sqrt{2}B_2, ..., \sqrt{2}B_{\frac{N}{2}}]$, and an amplitude

ratio of the Y second beam signals is $\sqrt{2}K \times B_1 : \sqrt{2}K \times B_2 : ... : \sqrt{2}K \times B_{\frac{N}{2}}$.

As shown in FIG. 5, when N is an even number, an amplitude ratio of the N output signals is $(A_1 + K \times B_1) : (A_1 - K \times B_1) : ... : (A_{\frac{N}{2}} + K \times B_{\frac{N}{2}}) : (A_{\frac{N}{2}} - K \times B_{\frac{N}{2}})$.

For example, as shown in FIG. 6, the antenna array 200 is a linear array, the antenna array 200 includes six radiating elements: a radiating element a1, a radiating element a2, a radiating element a3, a radiating element a4, a radiating element a5, and a radiating element a6, and a center of the antenna array 200 is a center line L in FIG. 6. N = 6, X = 3, and Y = 3. As shown in FIG. 7, amplitudes of three first beam signals output by the first power division component 121 according to amplitudes of elements in the first beam vector A are respectively $\sqrt{2}A_1$, $\sqrt{2}A_2$, and $\sqrt{2}A_3$, and amplitudes of three second beam signals output by the second power division component 122 according to amplitudes of elements in the second beam vector B are respectively $K \times \sqrt{2}B_1$, $K \times \sqrt{2}B_2$, and $K \times \sqrt{2}B_2$. There are three 180° bridges 1332. Amplitudes of two output signals formed by mixing $\sqrt{2}A_1$ and $K \times \sqrt{2}B_1$ by one 180° bridge 1332 are respectively $A_1 + K \times B_1$ and $A_1 - K \times B_1$, amplitudes of two output signals formed by mixing $\sqrt{2}A_2$ and $K \times \sqrt{2}B_2$ by another 180° bridge 1332 are respectively $A_2 + K \times B_2$ and $A_2 - k \times B_2$, and amplitudes of two output signals formed by mixing $\sqrt{2}A_3$ and $K \times \sqrt{2}B_3$ by the third 180° bridge 1332 are respectively $A_3 + K \times B_3$ and $A_3 - k \times B_3$. Amplitudes of six output signals that are finally output are respectively $A_3 + K \times B_3$, $A_2 + K \times B_2$, $A_1 + K \times B_1$, $A_1 - K \times B_1$, $A_2 - K \times B_2$, and $A_3 - K \times B_3$. Ordered locations of the six output signals correspond to locations of the six radiating elements in FIG. 6. For example, as shown in FIG. 7, the output signal with the amplitude of $A_3 + K \times B_3$ is fed into the radiating element a1, the output signal with the amplitude of $A_2 + K \times B_2$ is fed into the radiating element a2, the output signal with the amplitude of $A_2 - K \times B_2$ is fed into the radiating element a5, the output signal with the amplitude of $A_1 + K \times B_1$ is fed into the radiating element a3, the output signal with the amplitude of $A_1 - K \times B_1$ is fed into the radiating element a4, and the output signal with the amplitude of $A_3 - K \times B_3$ is fed into the radiating element a6.

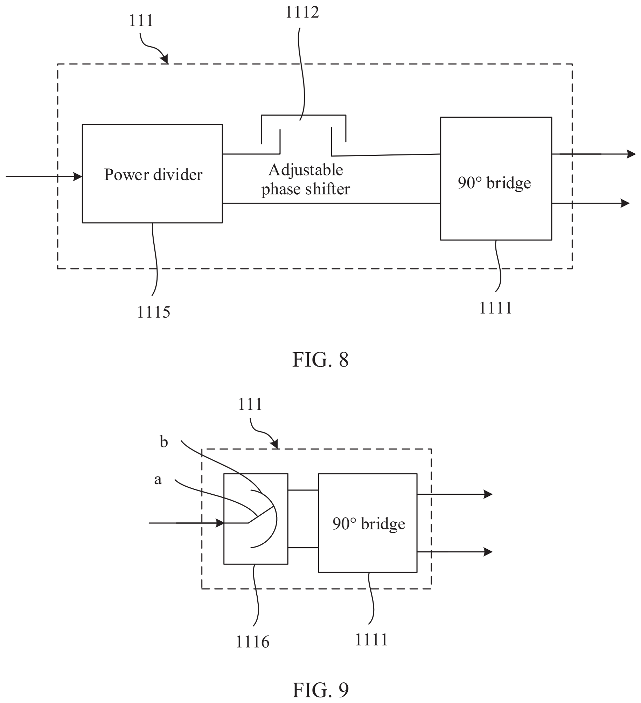

In a possible implementation, as shown in FIG. 8, the power division ratio-adjustable power division component 111 includes a power divider 1115, a 90° bridge 1111, and an adjustable phase shifter 1112. An input end of the power divider 1115 is configured to receive an input signal. One output port of the power divider 1115 is connected to one input port of the 90° bridge 1111, the other output port of the power divider 1115 is connected to an input port of the adjustable phase shifter 1112, and an output port of the adjustable phase shifter 1112 is connected to the other input port of the 90° bridge 1111. The power divider 1115 divides the input signal into two parts through equal power division. The adjustable phase shifter 1112 adjusts and controls a phase of an input signal of the bridge 1111. The 90° bridge 1111 makes a vector sum of an output signal of the bridge 1111 adjustable, thereby making an amplitude ratio of two-path output signals of the bridge 1111 adjustable.

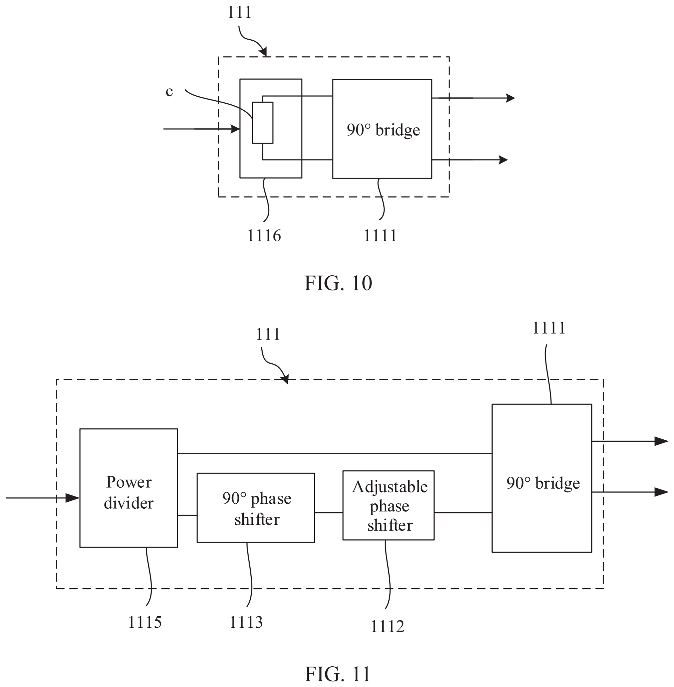

In a possible implementation, as shown in FIG. 9 and FIG. 10, the power division ratio-adjustable power division component 111 includes a power division-phase structure 1116 and a bridge 1110. The power division-phase structure 1116 may be an integrated structure formed by combining the power divider 1115 and the adjustable phase shifter 1112, and the power division-phase structure 1116 can implement functions of power division and phase shifting. As shown in FIG. 9, the power division-phase structure 1116 changes phases of two-path signals by rotating a pointer of a rotating shaft a on an arc b. Alternatively, as shown in FIG. 10, in the power division-phase structure 1116, a slidable medium c is disposed on a transmission line of the power division part, and electrical lengths on the two paths are changed by sliding the medium 16, so that phases of the two-path signals are changed.

In a possible implementation, a structure of the power division ratio-adjustable power division component 111 may alternatively be shown in FIG. 11. The power division ratio-adjustable power division component 111 includes a power divider 1115, a 90° phase shifter 1113, an adjustable phase shifter 1112, and a 90° bridge 1111.

One output port of the power divider 1115 is connected to one input port of the 90° bridge 1111, the other output port of the power divider 1115 is connected to an input port of the 90° phase shifter 1113, an output port of the 90° phase shifter 1113 is connected to an input port of the adjustable phase shifter 1112, and an output port of the adjustable phase shifter 1112 is connected to the other input port of the 90° bridge 1111.

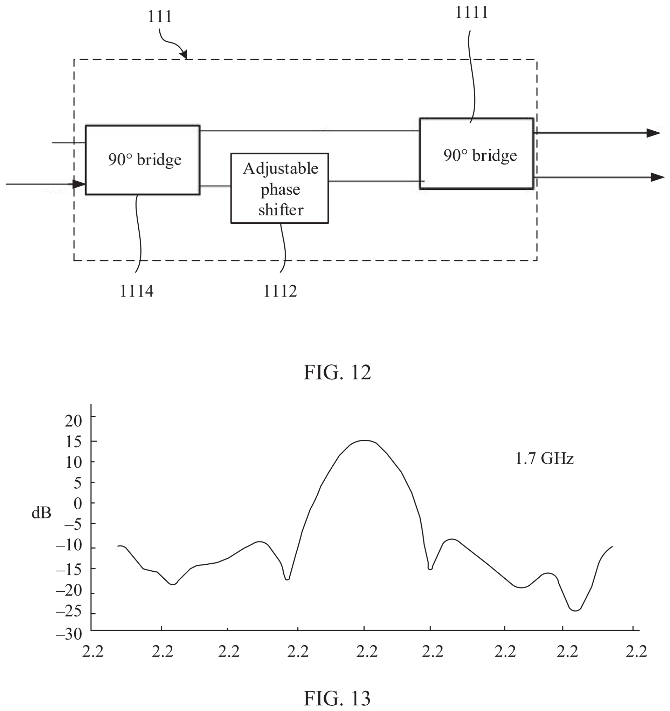

Alternatively, a structure of the power division ratio-adjustable power division component 111 may alternatively be shown in FIG. 12. The power division ratio-adjustable power division component 111 includes two 90° bridges and an adjustable phase shifter 1112. The two 90° bridges are respectively a 90° bridge 1114 and a 90° bridge 1111, and the adjustable phase shifter 1112 is located between the 90° bridge 1114 and the 90° bridge 1111. An input port of the adjustable phase shifter 1112 is connected to an output port of the 90° bridge 1114, an output port of the adjustable phase shifter 1112 is connected to one input port of the 90° bridge 1111, and the other input port of the 90° bridge 1111 is connected to an output end of the 90° bridge 1114. The 90° bridge 1114 divides an input signal into two paths of signals. A phase of a signal on one path changes after the signal passes through the adjustable phase shifter 1112, and a signal on the other path is input to the 90° bridge 1111. The 90° bridge 1111 mixes the two paths of signals and generates two signals.

In an embodiment of this application, by using the power division ratio-adjustable power division component 111 of the foregoing structure, different proportions of the first beam vector and the second beam vector at high frequency and low frequency are obtained. At low frequency, the proportion of the first beam vector increases, so that the beam is narrowed. At high frequency, the proportion of the second beam vector increases, so that the beam becomes wider. In this way, a characteristic of a same beam width from low frequency to high frequency is obtained through compensation, implementing same beam width coverage from low frequency to high frequency in a wide band.

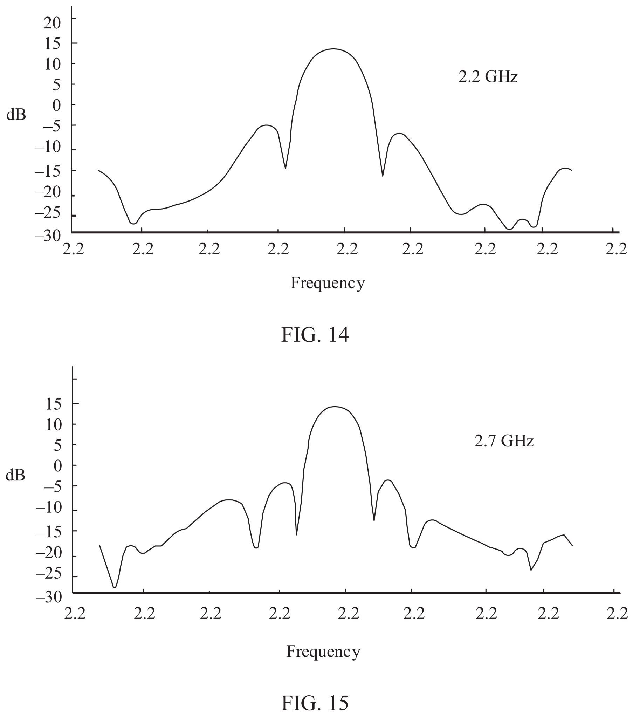

In an embodiment of this application, when the power division ratio-adjustable power division component 111 is used, a simulation test is performed on the antenna array 200. A test result is shown in FIG. 13. At the low frequency 1.7 GHz, a gain is 15.6 dB, and a 3 dB beam width is 30.9. As shown in FIG. 14, at the intermediate frequency 2.2 GHz, a gain is 16 dB, and a 3 dB beam width is 31.4. As shown in FIG. 15, at the high frequency 2.7 GHz, a gain is 16 dB, and a 3 dB beam width is 30.2. Therefore, by using the dispersion-type power division ratio-adjustable power division component 111, a characteristic of a same beam width from low frequency to high frequency in a wide band is obtained, implementing same beam width coverage from low frequency to high frequency. In this way, during application, cells from low frequency to high frequency are implemented, so that different operators or different bands can operate in a same cell range, and can be set according to a same set of network planning and optimization.

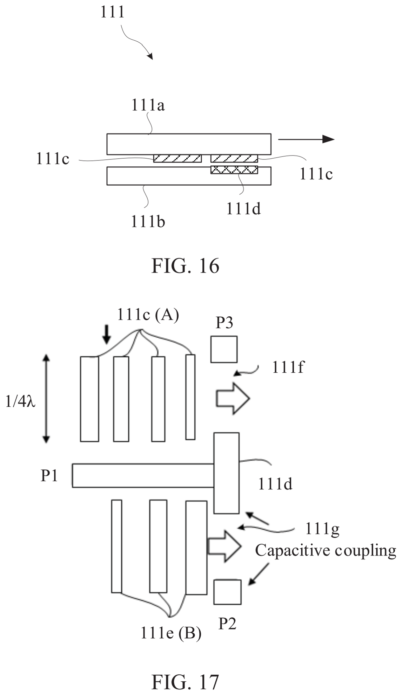

In a possible implementation, the power division ratio-adjustable power division component 111 may alternatively implement power division by switching strip lines through mechanical sliding. As shown in FIG. 16, the power division ratio-adjustable power division component 111 includes a first circuit board 111b and a slidable second circuit board 110 that are stacked, and a first metal layer 111d is disposed on the first circuit board 111b. As shown in FIG. 17, an end of the first metal layer 111d has an input port (for example, P1), and a first output port (P3) and a second output port (P2) that are connected in parallel are formed on the first metal layer 111d. In FIG. 17, an end at which the first output port (P3) is located on the first metal layer 111d has a first coupling gap 111f, and an end at which the second output port (P2) is located on the first metal layer 111d has a second coupling gap 111g.

A second metal layer 111c and a third metal layer 111e are disposed on a surface that is of the second circuit board 110 and that faces the first metal layer 111d. The second metal layer 111c corresponds to the first coupling gap 111f, and the third metal layer 111e corresponds to the second coupling gap 111g. In use, the second circuit board 110 may be slid in an arrow direction in FIG. 16. During sliding, the second metal layer 111c and the third metal layer 111e are located respectively at the first coupling gap 111f and the second coupling gap 111g. In this case, two ends of the first coupling gap 111f are coupled and connected by the second metal layer 111c, and two ends of the second coupling gap 111g are coupled and connected by the third metal layer 111e. In this way, the first output port (P3) and the second output port (P2) can output signals. Different impedance is generated at the first coupling gap 111f and the second coupling gap 111g by controlling widths of the second metal layer 111c and the third metal layer 111e, so that two signals with different amplitudes are output respectively from the first output port (P3) and the second output port (P2) after an input signal passes through the first metal layer 111d, thereby implementing power division on the input signal.

It should be noted that the change of the amplitude ratio regulation factor that is implemented through the power division in FIG. 16 and FIG. 17 is not a continuous change, and may be divided into several fixed ranges based on quantities of strip lines in the second metal layer 111c and the third metal layer 111e that are used.

As shown in FIG. 17, the third metal layer 111e may include a plurality of first strip lines B with different widths. For example, FIG. 17 shows three first strip lines B with different widths. The second metal layer 111c includes a plurality of second strip lines A with different widths. For example, FIG. 17 shows four second strip lines A with different widths. The first strip line B and one of the second strip lines A may have a same width. In this way, the change can be divided into several fixed ranges based on quantities of the first strip lines B and the second strip lines A, thereby implementing power division on the input signal based on different amplitude ratio regulation factors.

It should be noted that, in an embodiment of this application, the first strip line B and the second strip line A in FIG. 17 have line widths that may be set based on a requirement, and include, but are not limited to, the structure shown in FIG. 17.

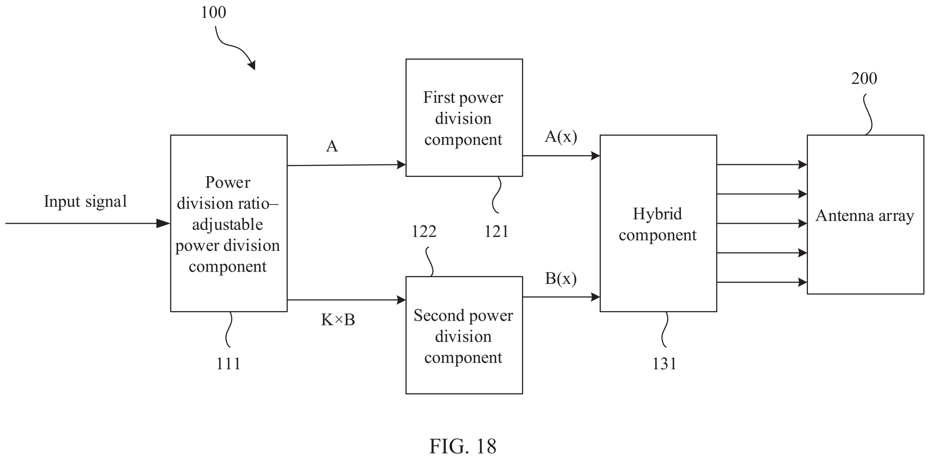

In another possible implementation, as shown in FIG. 18, a power division ratio-adjustable power division component may be provided as the first power division component 121, and a power division ratio-adjustable power division component may be provided as the second power division component 122. In this case, if the first power division component 121 has different amplitude ratio regulation factors, amplitudes of X first beam signals that are output are adjustable, and if the second power division component 122 has different amplitude ratio regulation factors, amplitudes of Y second beam signals that are output are adjustable, thereby implementing refined adjustment of the beam width.

The following describes in detail power division corresponding to a case in which the first power division component 121 and the second power division component 122 are power division units with adjustable amplitude ratio regulation factors, mainly through implementations of two cases in which N is an odd number and N is an even number.

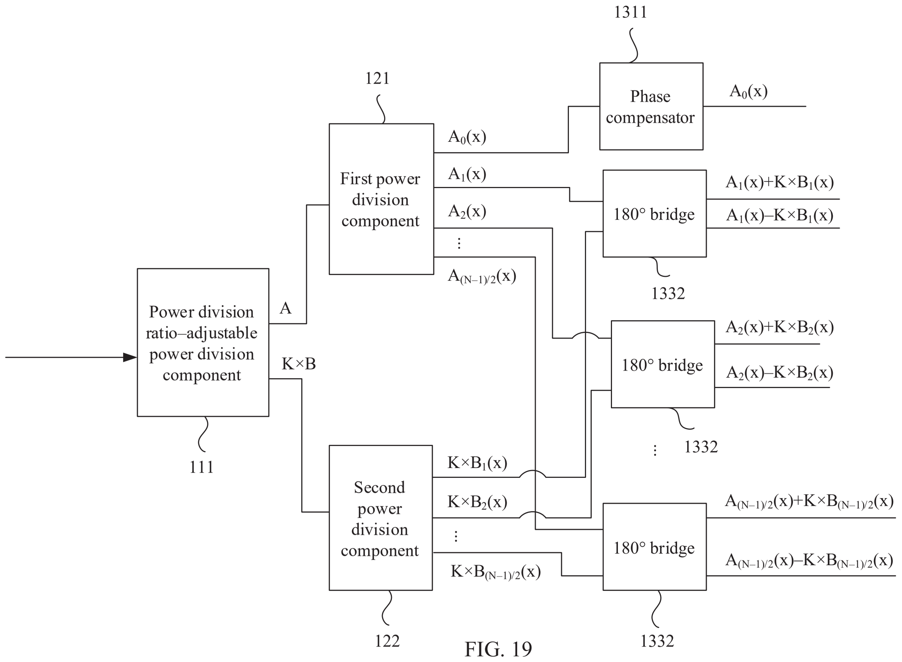

In a first implementation, N is an odd number. For example, as shown in FIG. 19, amplitudes of X first beam signals output by the first power division component 121 may be respectively $A_0(x)$, $A_1(x)$, $A_2(x)$, ..., and $A_{\frac{N-1}{2}}(x)$.

Amplitudes of Y second beam signals may be respectively $K \times B_1(y)$, $K \times B_2(y)$, ..., and $K \times B_{\frac{N-1}{2}}(y)$. $A_0(x) = X_0 A_0$, $A_1$

$(x) = X_1 A_1$, $A_2(x) = X_2 A_2$, $A_{\frac{N-1}{2}}(x) = X_{\frac{N-1}{2}} A_{\frac{N-1}{2}}$, and $A_{\frac{N}{2}}(x) = X_{\frac{N}{2}} A_{\frac{N}{2}}$, where $X_0, X_1, X_2$, $X_{\frac{N-1}{2}}$, and $X_{\frac{N}{2}}$ are power division coefficients of the first power division component 121. $B_1(y) = Y_1 B_1$, $B_2(y) = Y_2 B_2$, $B_{\frac{N-1}{2}}(y) = Y_{\frac{N-1}{2}} B_{\frac{N-1}{2}}$, and $B_{\frac{N}{2}}(x) = Y_{\frac{N}{2}} B_{\frac{N}{2}}$, where $Y_1, Y_2$, $Y_{\frac{N-1}{2}}$, and $Y_{\frac{N}{2}}$ are power division coefficients of the second power division component 122. For a manner of calculating each power division coefficient, refer to the following description.

As shown in FIG. 19, when N is an odd number, X first beam signals and Y second beam signals are mixed by using a phase compensator 1311 and (N-1)/2 180° bridges 1332 to form N output signals, where the N output signals are respectively $(A_{\frac{N-1}{2}}(x) + K \times B_{\frac{N-1}{2}}(y), ...,$ $A_2(x) + K \times K \times B_2(y), A_1(x) + K \times K \times B_1(y), A_0(x), A_1(x) - K \times K \times B_1(y), A_2(x) - K \times K \times B_2(y), ..., A_{\frac{N-1}{2}}(x) - K \times B_{\frac{N-1}{2}}(y))$.

In an embodiment of this application, the power division ratio-adjustable power division component 111 with an adjustable amplitude ratio regulation factor is provided as both the first power division component 121 and the first power division component 121. In this way, refined adjustment and control can be implemented, so that a beam representation capability for entire vector space can be obtained.

In an embodiment of this application, the first power division component 121 includes (X-1) power dividers, where the (X-1) power dividers are connected in series, in parallel, or in series and parallel; and the second beam vector includes (Y-1) power dividers, where the (Y-1) power dividers are connected in series, in parallel, or in series and parallel.

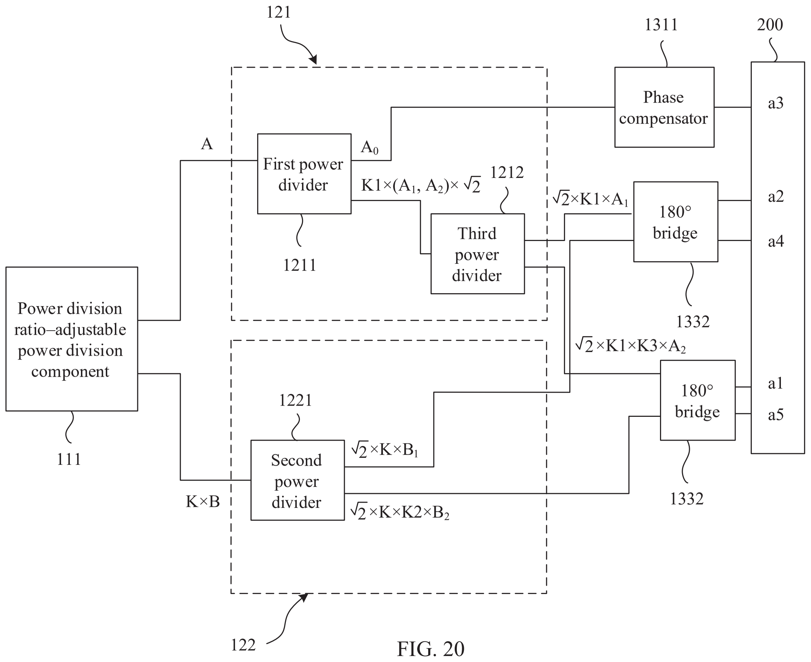

For example, as shown in FIG. 20, N = 5, X = 3, and Y = 2. The first power division component 121 includes two power dividers: a first power division component 1211 and a third power divider 1212. An amplitude ratio regulation factor of the first power division component 1211 may be K1. In this case, amplitudes of two signals output by the first power division component 1211 are $A_0$ and $K1 \times \sqrt{2}(A_1, A_2)$. An amplitude ratio regulation factor of the third power divider 1212 may be K3. In this case, amplitudes of two signals output by the third power divider 1212 are $K1 \times \sqrt{2} A_1$ and $K3 \times K1 \times \sqrt{2} A_2$. Finally, three first beam signals output by the first power division component 121 are $(A_0(x), A_1(x), A_2(x))$, with amplitudes of $A_0$, $K1 \times \sqrt{2} A_1$, and $K3 \times K1 \times \sqrt{2} A_2$ respectively. Therefore, $X_0 = 1$, $X_1 = K1 \times \sqrt{2}$, and $X_2 = K3 \times K1 \times \sqrt{2}$. Refined adjustment and control of the X first beam signals can be implemented by adjusting and controlling the amplitude ratio regulation factors K1 and K2 of the first power division component 1211 and the third power divider 1212.

Correspondingly, as shown in FIG. 20, the second power division component includes one power divider, for example, a second power division component 1221. An amplitude ratio regulation factor of the second power division component 1221 may be 1:K2. In this case, amplitudes of two second beam signals output by the second power division component 1221 are respectively $K \times \sqrt{2} \times B_1$ and $K \times K2 \times \sqrt{2} \times B_2$, where K is an amplitude ratio regulation factor of the power division ratio-adjustable power division component 111, and K2 is the amplitude ratio regulation factor of the second power division component 1221. In this case, the two second beam signals $(K \times B_1(y), K \times B_2(y))$ output by the second power division component 122 are respectively $K \times \sqrt{2} \times B_1$ and $K \times K2 \times \sqrt{2} \times B_2$, and then $Y_1 = \sqrt{2}$, and $Y_2 = K2 \times \sqrt{2}$. Power division coefficients of the second power division component 122 are respectively $Y_1 = \sqrt{2}$, and $Y_2 = K2 \times \sqrt{2}$.

When the phase compensator 1311 and the 180° bridges 1332 in the hybrid component 131 mix the first beam signals and the second beam signals, for a mixing manner, refer to the description in the foregoing content. Amplitudes of five output signals that are finally output are respectively $(K3 \times K1 \times A_2 + K \times K2 \times B_2)$, $(K1 \times A_1 + K \times B_1)$, $A_0$, $(K1 \times A_1 - K \times B_1)$, and $(K3 \times K1 \times A_2 - K \times K2 \times B_2)$.

A correspondence between the foregoing five output signals and the five radiating elements (the radiating element a1, the radiating element a2, the radiating element a3, the radiating element a4, and the radiating element a5) in the antenna array 200 shown in FIG. 3 may be shown in Table 1:

Table 1

| a1 | a2 | a3 | a4 | a5 |
|---|---|---|---|---|
| $K3 \times K1 \times A_2$ $+ K \times K2 \times B_2$ | $K1 \times A_1 + K \times B_1$ | $A_0$ | $K1 \times A_1 - K \times B_1$ | $K3 \times K1 \times A_2 - K \times K2 \times B_2$ |

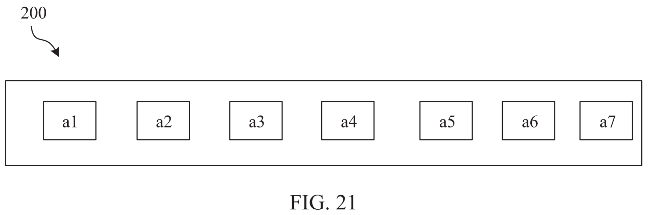

In an embodiment of this application, both a quantity of power dividers included in the first power division component 121 and a quantity of power dividers of the second power division component 122 are related to a quantity of elements of the antenna array 200. For example, as shown in FIG. 21, the antenna array 200 has seven radiating elements in a row, and the seven radiating elements are respectively a radiating element a1, a radiating element a2, a radiating element a3, a radiating element a4, a radiating element a5, a radiating element a6, and a radiating element a6. In this case, $N = 7$, $X = (N - 1)/2 + 1 = 4$, $Y = (N - 1)/2 = 3$, and the first power division component 121 includes three power dividers: a first power division component 1211, a third power divider 1212, and a fourth power divider 1213. The third power divider 1212 and the fourth power divider 1213 are connected in parallel. The first power division component 1211 is separately connected in series to the third power divider 1212 and the fourth power divider 1213. Amplitude ratio regulation factors of the first power division component 1211, the third power divider 1212, and the fourth power divider 1213 are respectively K1, K3, and K4. The first power division component 121 includes two power dividers: a second power division component 1221 and a fifth power divider. The fifth power divider is connected to one output end of the second power division component 1221. Amplitude ratio regulation factors of the second power division component 1221 and the fifth power divider are respectively K2 and K5. In this case, amplitudes of four first beam signals ($A_0(x)$, $A_1(x)$, $A_2(x)$, $A_3(x)$) output by the first power division component 121 are respectively $A_0$, $K4 \times \sqrt{2} A_1$, $K1 \times \sqrt{2} A_2$, and $K1 \times K3 \times \sqrt{2} A_3$.

Therefore, $X_0 = 1$, $X_1 = K4 \times \sqrt{2}$, $X_2 = K1 \times \sqrt{2}$, and $X_3 = K1 \times K3 \times \sqrt{2}$, where K1, K3, and K4 are the amplitude ratio regulation factors of the first power division component 1211, the third power divider 1212, and the fourth power divider 1213 respectively.

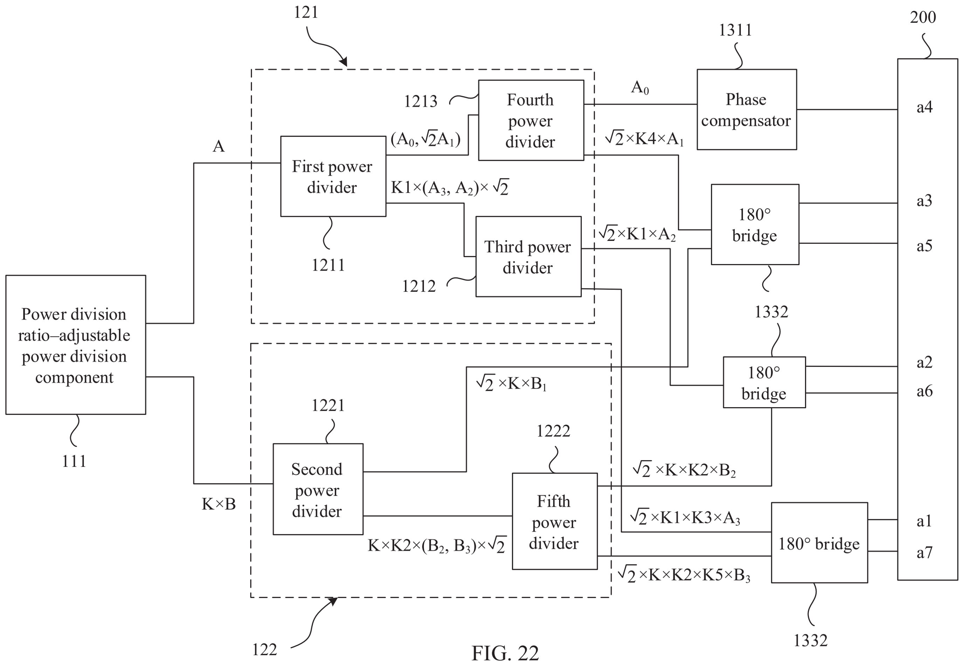

Correspondingly, as shown in FIG. 22, the first power division component 121 includes two power dividers: a second power division component 1221 and a fifth power divider 1222. Amplitude ratio regulation factors of the second power division component 1221 and the fifth power divider 1222 are respectively K2 and K5. Amplitudes of three second beam signals ($K \times B_1(y)$, $K \times B_2(y)$, $K \times B_3(y)$) output by the second power division component 122 are respectively $K \times \sqrt{2} \times B_1$, $K \times K2 \times \sqrt{2} \times B_2$, and $K \times K2 \times K5 \times \sqrt{2} \times B_3$. Therefore, power division coefficients are respectively $Y_1 = \sqrt{2}$, $Y_2 = K2 \times \sqrt{2}$, and $Y_3 = K2 \times K5 \times \sqrt{2}$.

Seven output signals formed by mixing the first beam signals and the second beam signals by using the phase compensator 1311 and the three 180° bridges 1332 are respectively

$$(K1 \times K3 \times \sqrt{2} A_3 + K \times K2 \times K5 \times \sqrt{2} \times B_3), (K1 \times \sqrt{2} A_2 + K \times K2 \times \sqrt{2} \times B_2), (K4 \times \sqrt{2} A_1 + K \times \sqrt{2} \times B1)$$

$$A_0, (K4 \times \sqrt{2} A_1 - K \times \sqrt{2} \times B1), (K1 \times \sqrt{2} A_2 - K \times K2 \times \sqrt{2} \times B_2)$$ and

$$(K1 \times K3 \times \sqrt{2} A_3 + K \times K2 \times K5 \times \sqrt{2} \times B_3).$$

A correspondence between the foregoing seven output signals and the seven radiating elements (the radiating element a1, the radiating element a2, the radiating element a3, the radiating element a4, and the radiating element a5) in the antenna array 200 shown in FIG. 21 may be shown in Table 2 and FIG. 22:

Table 2

| a1 | a2 | a3 | a4 |
|---|---|---|---|
| $K1 \times K3 \times \sqrt{2} A_3 + K \times K2 \times K5 \times \sqrt{2} \times B_3$ | $K1 \times \sqrt{2} A_2 + K \times K2 \times \sqrt{2} \times B_2$ | $K4 \times \sqrt{2} A_1 + K \times \sqrt{2} \times B_1$ | $A_0$ |

(continued)

| a5 | a6 | a7 | |
|---|---|---|---|
| $K4 \times \sqrt{2} A_1 - K \times \sqrt{2} \times B_1$ | $K1 \times \sqrt{2} A_2 - K \times K2 \times \sqrt{2} \times B_2$ | $K1 \times K3 \times \sqrt{2} A_3 + K \times K2 \times K5 \times \sqrt{2} \times B_3$ | |

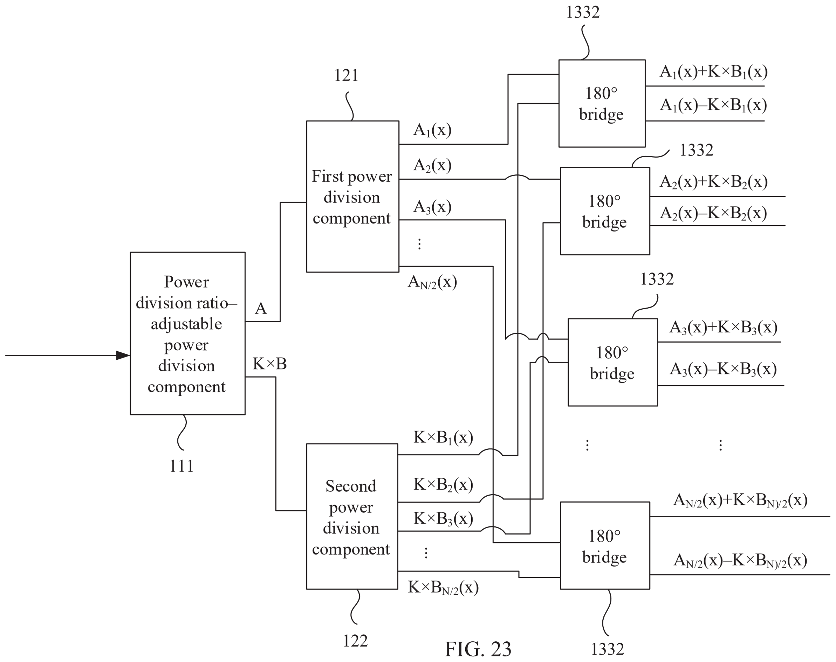

In a second implementation, N is an even number. For example, as shown in FIG. 23, X first beam signals output by the first power division component 121 are respectively $A_1(x)$, $A_2(x)$, ..., and $A_{\frac{N}{2}}(x)$. Y first beam signals are respectively $B_1(y)$, $B_2(y)$, ..., and $B_{\frac{N}{2}}(y)$. The X first beam signals and the Y second beam signals are mixed by using N/2 180° bridges 1332 to form an output vector

$$A(x)+K \times B(x) = (A_{\frac{N}{2}}(x) + K \times B_{\frac{N}{2}}(y), \ ..., \ A_2(x) + K \times B_2(y), \ A_1(x) + K \times B_1(y), \ A_1(x) - K \times B_1(y), \ A_2(x) - K \times B_2(y), \ A_{\frac{N}{2}}(x) - K \times B_{\frac{N}{2}}(y). \ \blacksquare$$

.

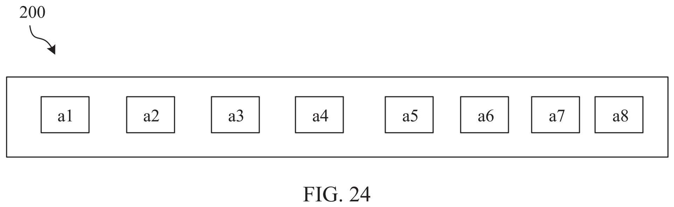

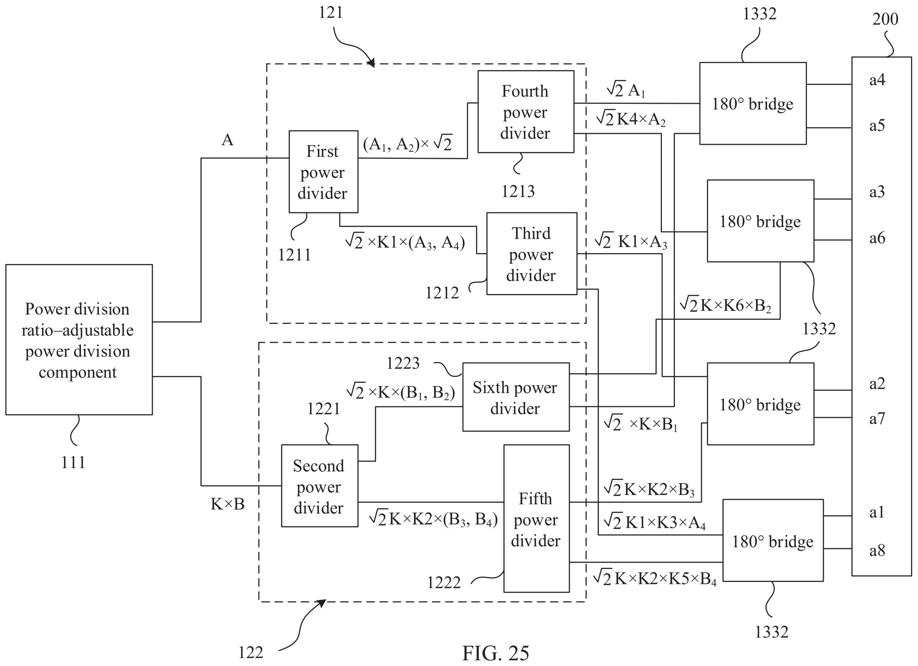

For example, as shown in FIG. 24, the antenna array 200 includes eight radiating elements (a radiating element a1, a radiating element a2, a radiating element a3, a radiating element a4, a radiating element a5, a radiating element a6, a radiating element a7, and a radiating element a8). Therefore, N = 8, X = 4, Y = 4, X - 1 = 3, Y - 1 = 3, and N/2 = 4. As shown in FIG. 25, the first power division component 121 includes three power dividers: a first power division component 1211, a third power divider 1212, and a fourth power divider 1213. Amplitude ratio regulation factors of the first power division component 1211, the third power divider 1212, and the fourth power divider 1213 are respectively K1, K3, and K4. The third power divider 1212 and the fourth power divider 1213 are connected in parallel. The first power division component 1211 is separately connected in series to the third power divider 1212 and the fourth power divider 1213. Amplitudes of signals output by the first power division component 1211 are respectively $\sqrt{2}(A_1, A_2)$ and $K1 \times \sqrt{2}(A_3, A_4)$. Amplitudes of signals output by the fourth power divider 1213 are respectively $\sqrt{2}A_1$ and $K4 \times \sqrt{2}A_2$. Amplitudes of signals output by the third power divider 1212 are respectively $K1 \times \sqrt{2}A_3$ and $K3 \times K1 \times \sqrt{2}A_4$. Signal amplitudes of four first beam signals ($A_1(x)$, $A_2(x)$, $A_3(x)$, $A_4(x)$) output by the first power division component 121 are respectively $\sqrt{2}A_1, K4 \times \sqrt{2}A_2, K1 \times \sqrt{2}A_3$, and $K3 \times K1 \times \sqrt{2}A_4$. According to $A_1(x) = X_1A_1$, $A_2(x) = X_2A_2$, $A_3(x) = X_3A_3$, and $A_4(x) = X_4A_4$, power division coefficients in the first power division component 121 are respectively $X_1 = \sqrt{2}$, $X_2 = K4 \times \sqrt{2}$, $X_3 = K1 \times \sqrt{2}$, and $X_4 = K3 \times K1 \times \sqrt{2}$.

Correspondingly, the second power division component 122 includes three power dividers: a second power division component 1221, a fifth power divider 1222, and a sixth power divider 1223. The fifth power divider 1222 and the sixth power divider 1223 are disposed in parallel. The second power division component 1221 is separately connected in series to the fifth power divider 1222 and the sixth power divider 1223. Amplitude ratio regulation factors of the second power division component 1221, the fifth power divider 1222, and the sixth power divider 1223 are respectively K2, K5, and K6. The second power division component 1221 outputs $K \times \sqrt{2} \times (B_1, B_2)$ and $K \times K2 \times \sqrt{2} \times (B_3, B_4)$. Amplitudes of signals output by the sixth power divider 1223 are respectively $K \times \sqrt{2} \times B_1$ and $K \times \sqrt{2} \times K6 \times B_2$. Amplitudes of signals output by the fifth power divider 1222 are respectively $K \times K2 \times \sqrt{2} \times B_3$ and $K \times \sqrt{2} \times K2 \times K5 \times B_4$. In this case, signal amplitudes of four second beam signals ($B_1(y)$, $B_2(y)$, $B_3(y)$, $B_4(y)$) output by the second power division component 122 are respectively $K \times \sqrt{2} \times B_1, K \times \sqrt{2} \times K6 \times B_2, K \times K2 \times \sqrt{2} \times B_3$, and $K \times \sqrt{2} \times K2 \times K5 \times B_4$. In this case, power division coefficients in the second beam vector are respectively $Y_1 = \sqrt{2}$, $Y_2 = K6 \times \sqrt{2}$, $Y_3 = K2 \times \sqrt{2}$, and $Y_4 = K2 \times K5 \times \sqrt{2}$.

When four 180° bridges 1332 in the hybrid component 131 mix the four first beam signals and the fourth two-element, for a mixing manner, refer to the description in the foregoing content. Eight output signals that are finally output are respectively

$$(K3{\times}K1{\times}\sqrt{2}A_4{+}K{\times}\sqrt{2}{\times}K2{\times}K5{\times}B_4),\ (K1{\times}\sqrt{2}A_3{+}K{\times}K2{\times}\sqrt{2}{\times}B_3),\ (K4{\times}\sqrt{2}A_2{+}K{\times}\sqrt{2}{\times}K6{\times}B_2),$$

$$(\sqrt{2}A_1 + K \times \sqrt{2} \times B_1),\ (\sqrt{2}A_1 - K \times \sqrt{2} \times B_1),\ (K4{\times}\sqrt{2}A_2{-}K{\times}\sqrt{2}{\times}K6{\times}B_2),\ (K1{\times}\sqrt{2}A_3{-}\ K{\times}K2{\times}\sqrt{2}{\times}B_3)$$

, and $(K3{\times}K1{\times}\sqrt{2}A_4{-}K{\times}\sqrt{2}{\times}K2{\times}K5{\times}B_4)$. A correspondence between the foregoing eight output signals and the eight radiating elements (the radiating element a1, the radiating element a2, the radiating element a3, the radiating element a4, the radiating element a5, the radiating element a6, the radiating element a7, and the radiating element a8) in the antenna array 200 shown in FIG. 24 may be shown in Table 3 and FIG. 25:

Table 3

| a1 | a2 | a3 | a4 |
|---|---|---|---|
| $K3{\times}K1{\times}\sqrt{2}A_4{+}K{\times}\sqrt{2}{\times}K2{\times}K5{\times}B_4$ | $K1{\times}\sqrt{2}A_3{+}K{\times}K2{\times}\sqrt{2}{\times}B_3$ | $K4{\times}\sqrt{2}A_2{+}K{\times}\sqrt{2}{\times}K6{\times}B_2$ | $\sqrt{2}A_1 + K \times \sqrt{2} \times B_1$ |
| a5 | a6 | a7 | a8 |
| $\sqrt{2}A_1 - K \times \sqrt{2} \times B_1$ | $K4{\times}\sqrt{2}A_2{-}K{\times}\sqrt{2}{\times}K6{\times}B_2$ | $K1{\times}\sqrt{2}A_3{-}K{\times}K2{\times}\sqrt{2}{\times}B_3$ | $K3{\times}K1{\times}\sqrt{2}A_4{-}K{\times}\sqrt{2}{\times}K2{\times}K5{\times}B_4$ |

It can be learned from the foregoing content that, by providing the power division ratio-adjustable power division component 111 with an adjustable amplitude ratio regulation factor as the first power division component 121 and the second power division component 122, when the radiating element of the antenna array 200 changes, the amplitude of each element in the first beam vector and the second beam vector can be accurately adjusted, thereby improving a degree of freedom of adjustment and control of entire vector space, making a range of adjustment and control of a beam width larger, and making sidelobe suppression and roll-off control more refined.

It may be understood that, in an embodiment of this application, when the first power division component 121 and the second power division component 122 are fixed power dividers with fixed amplitude ratio regulation factors, the structures shown in FIG. 20, FIG. 22, and FIG. 25 may be used for the first power division component 121 and the second power division component 122. Different from the foregoing embodiments, when the first power division component 121 and the second power division component 122 are fixed power dividers with fixed amplitude ratio regulation factors, K1 = K3 = K4 = 1, and K2 = K5 = K6 = 1. In this case, the power division circuits shown in FIG. 2 and FIG. 5 can be obtained.

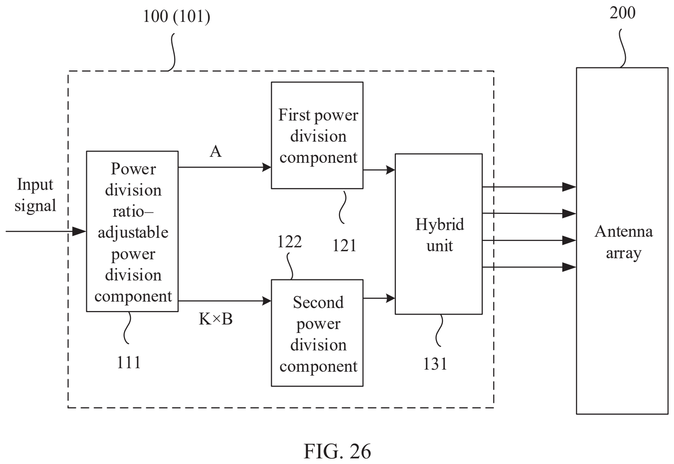

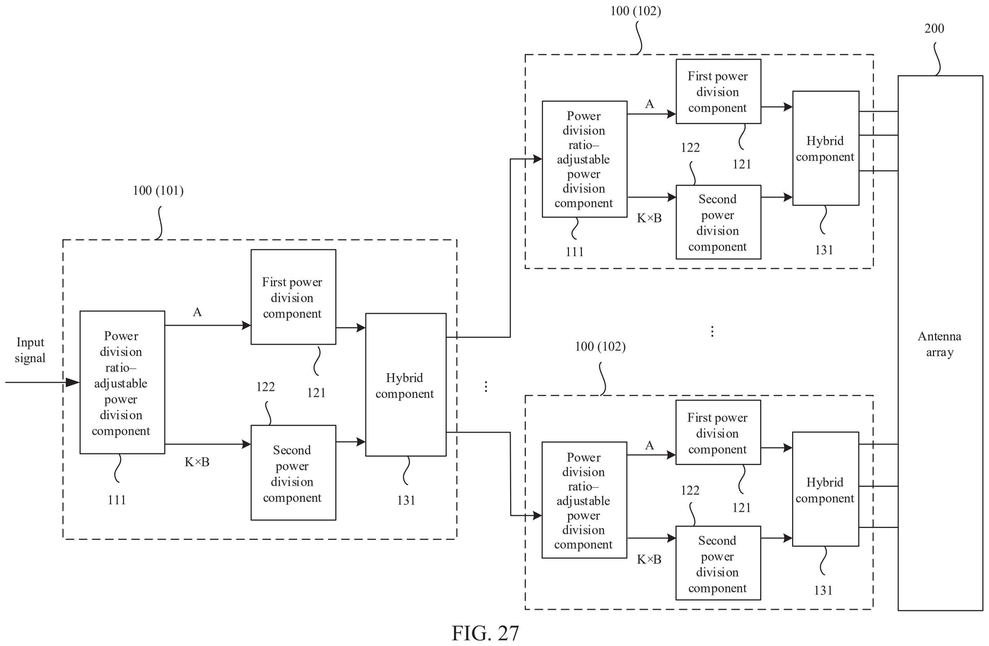

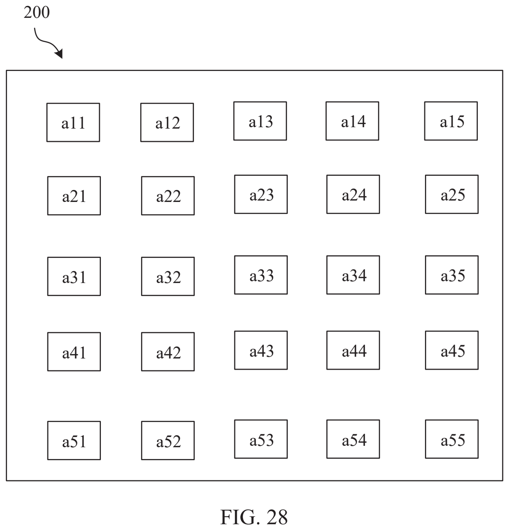

The antenna array feeding network 100 provided in embodiments of this application may provide feeding signals to the linear arrays shown in FIG. 24 and FIG. 21, and may further provide a feeding signal to a rectangular antenna array 200 shown in FIG. 28. When a feeding signal is provided to a linear array, one stage of feeding network shown in FIG. 26 may be required. When a feeding signal is provided to a rectangular antenna array 200, power division usually needs to be performed on a row and a column separately, and in this case, two stages of feeding networks shown in FIG. 27 are usually required.

The following separately describes in detail feeding systems required for the two antenna arrays 200.

When the antenna array 200 is a linear array (as shown in FIG. 3, FIG. 6, FIG. 21, and FIG. 24), a feeding system provided in an embodiment of this application, as shown in FIG. 27, includes a first-stage feeding network 101. The antenna array feeding network 100 described in any one of the foregoing embodiments may be used as the first-stage feeding network 101. The first-stage feeding network 101 may feed a signal into each radiating element in the antenna array 200. For a structure of the antenna array feeding network 100, refer to the foregoing descriptions. Details are not described again in embodiments of this application.

When the antenna array 200 is a rectangular array, for example, a 5×5 array shown in FIG. 28, certainly, the antenna array 200 may include other antenna arrays, for example, antenna arrays 200 formed by different rows and columns, such as a 5×4 array and a 4×4 array, a feeding system includes two stages. As shown in FIG. 27, the feeding system includes a first-stage feeding network 101 and a plurality of second-stage feeding networks 102. The plurality of second-stage feeding networks 102 are disposed in parallel. Each second-stage feeding network 102 and the first-stage feeding network 101 are connected in series. The antenna array feeding network 100 in the foregoing embodiments is used as both the first-stage feeding network 101 and each second-stage feeding network 102. Row power division (or column power division) for the antenna array 200 may be implemented on an input signal through the first-stage feeding network 101. Each second-stage feeding network 102 may perform column power division (or row power division) on a signal output by the first-stage feeding network 101. Finally, each output signal output by the second-stage feeding network 102 corresponds to each radiating element in the antenna array 200. In an embodiment of this application, power division is performed on both a row and a column of the antenna array 200 respectively through two stages of feeding networks, so that beams in two dimensions of a horizontal plane and a vertical plane are reconfigurable.

The following describes in detail the two stages of feeding networks by using several examples.

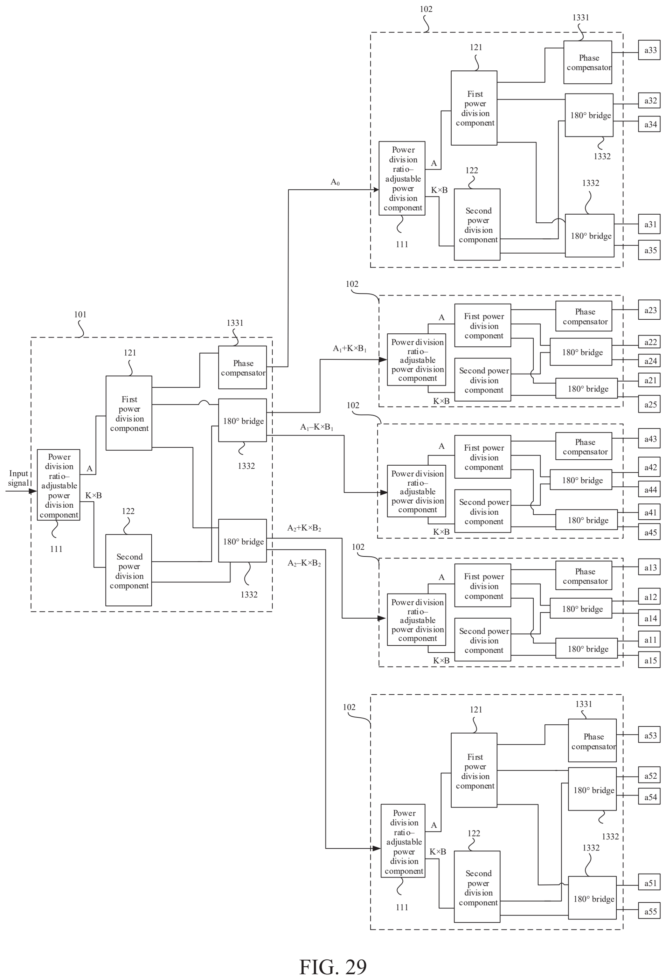

First, an antenna array 200 whose quantity of row elements and quantity of column elements are odd numbers is used as an example for description. As shown in FIG. 28, a $5 \times 5$ antenna array 200 is used as an example. A quantity of row elements of the antenna array 200 is 5, a quantity of column elements is also 5, and a total of 25 radiating elements are included. A distance between the radiating elements may be 80 mm, or certainly may be another value. A feeding system needs to output 25 output signals in total. Therefore, as shown in FIG. 29, a first-stage feeding network 101 may first perform row power division on an input signal once, to implement one-to-five row power division control. Then, column power division control is performed on each row.

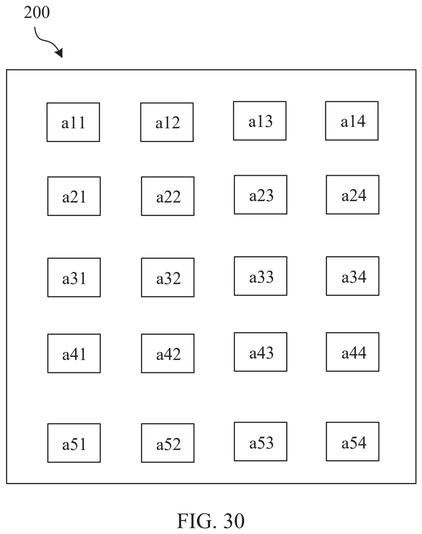

As shown in FIG. 30, the feeding system includes the first-stage feeding network 101 and five second-stage feeding networks 102. For the first-stage feeding network 101, N = 5. It can be learned from the foregoing embodiments and the description corresponding to FIG. 4 that amplitudes of five output signals output by the first-stage feeding network 101 are respectively $A_2 + K \times B_2, A_1 + K \times B_1, A_0, A_1 - K \times B_1$, and $A_2 - K \times B_2$. The five output signals output by the first-stage feeding network 101 are respectively transmitted to the five second-stage feeding networks 102. For example, $A_0$ is transmitted to a first second-stage feeding network 102, $A_1 + K \times B_1$ is transmitted to a second second-stage feeding network 102, $A_1 - K \times B_1$ is transmitted to a third second-stage feeding network 102, $A_2 + K \times B_2$ is transmitted to a fourth second-stage feeding network 102, and $A_2 - K \times B_2$ is transmitted to a fifth second-stage feeding network 102. For the second-stage feeding network 102, a quantity of column elements is 5, that is, N = 5. For column power division performed by each second-stage feeding network 102, refer to the foregoing embodiments and the description corresponding to FIG. 4. Finally, amplitudes of 25 output signals output by the second-stage feeding networks 102 and a correspondence between the 25 signals and the 25 radiating elements are shown in FIG. 29 and Table 4:

Table 4

| a11 | a12 | a13 | a14 | a15 |
|---|---|---|---|---|
| $(A_2+K \times B_2) \times (A_2+K \times B_2)$ | $(A_2+K \times B_2) \times (A_1+K \times B_1)$ | $(A_2+K \times B_2) \times A_0$ | $(A_2+K \times B_2) \times (A_1-K \times B_1)$ | $(A_2+K \times B_2) \times (A_2-K \times B_2)$ |
| a21 | a22 | a23 | a24 | a25 |
| $(A_1+K \times B_1) \times (A_2+K \times B_2)$ | $(A_1+K \times B_1) \times (A_1+K \times B_1)$ | $(A_1+K \times B_1) \times A_0$ | $(A_1+K \times B_1) \times (A_1-K \times B_1)$ | $(A_1+K \times B_1) \times (A_2-K \times B_2)$ |
| a31 | a32 | a33 | a34 | a35 |
| $A_0 \times (A_2+K \times B_2)$ | $A_0 \times (A_1+K \times B_1)$ | $A_0 \times A_0$ | $A_0 \times (A_1-K \times B_1)$ | $A_0 \times (A_2-K \times B_2)$ |
| a41 | a42 | a43 | a44 | a45 |
| $(A_1-K \times B_1) \times (A_2+K \times B_2)$ | $(A_1-K \times B_1) \times (A_1+K \times B_1)$ | $(A_1-K \times B_1) \times A_0$ | $(A_1-K \times B_1) \times (A_1-K \times B_1)$ | $(A_1-K \times B_1) \times (A_2-K \times B_2)$ |
| a51 | a52 | a53 | a54 | a55 |
| $(A_2-K \times B_2) \times (A_2+K \times B_2)$ | $(A_2-K \times B_2) \times (A_1+K \times B_1)$ | $(A_2-K \times B_2) \times A_0$ | $(A_2-K \times B_2) \times (A_1-K \times B_1)$ | $(A_2-K \times B_2) \times (A_2-K \times B_2)$ |

In an embodiment of this application, a simulation test is performed on the radiating elements of the antenna array 200 shown in FIG. 28 by using the foregoing feeding system, for example, $A_1 = 1, A_2 = 0.7, A_3 = 0.5, B_1 = 0.7$, and $B_2 = 0.8$. A test result is as follows: In an antenna coverage band of 1.7 GHz to 2.7 GHz, when K = 0, a corresponding beam width is 15°; when K = 1, a corresponding beam width is 30°; when K = 0.6, a corresponding beam width is 20°; or when K = 0.8, a corresponding beam width is 25°. Therefore, the antenna beam width can change from 15° to 30° by controlling K to change from 0 to 1. Certainly, a larger beam width can also be obtained. A larger beam width can be obtained by continuously controlling K to increase.

In an embodiment of this application, an amplitude ratio regulation factor of a power division ratio-adjustable power division component 111 in the first-stage feeding network 101 may be the same as an amplitude ratio regulation factor of a power division ratio-adjustable power division component 111 in the second-stage feeding network 102. For example, in FIG. 29, the amplitude ratio regulation factor of the power division ratio-adjustable power division component 111 in the first-stage feeding network 101 is K, and the amplitude ratio regulation factor of the power division ratio-adjustable power division component 111 in the second-stage feeding network 102 is also K. By setting same amplitude ratio regulation factors of the power division ratio-adjustable power division components 111 in the two stages of feeding networks, a horizontal beam width and a vertical beam width can be adjusted and controlled synchronously under same control.

Alternatively, an amplitude ratio regulation factor of a power division ratio-adjustable power division component 111 in the first-stage feeding network 101 may be different from an amplitude ratio regulation factor of a power division ratio-adjustable power division component 111 in the second-stage feeding network 102. For example, the amplitude ratio regulation factor of the power division ratio-adjustable power division component 111 in the first-stage feeding network 101 is K, and the amplitude ratio regulation factor of the power division ratio-adjustable power division component 111 in the second-stage feeding network 102 is K0, where K is not equal to K0. In this case, the power division ratio-adjustable power division component 111 in the first-stage feeding network 101 and the power division ratio-adjustable power division component 111 in the second-stage feeding network 102 can be separately controlled, so that a horizontal beam width and a vertical beam width can be separately controlled. Therefore, more degrees of freedom of adjustment and control of the beam width are obtained.

When the amplitude ratio regulation factor of the power division ratio-adjustable power division component 111 in the first-stage feeding network 101 is different from the amplitude ratio regulation factor of the power division ratio-adjustable power division component 111 in the second-stage feeding network 102, for example, the amplitude ratio regulation factor K of the power division ratio-adjustable power division component in the first-stage feeding network 101 is 0, and the amplitude ratio regulation factor K0 of the power division ratio-adjustable power division component 111 in the second-stage feeding network 102 is 1, a beam width in a horizontal direction is 15°, and a beam width in a vertical direction is 30°.

Alternatively, the amplitude ratio regulation factor K of the power division ratio-adjustable power division component 111 in the first-stage feeding network 101 is 1, and the amplitude ratio regulation factor K of the power division ratio-adjustable power division component 111 in the second-stage feeding network 102 is 0. It is obtained through testing that a beam width in a horizontal direction is 30°, and a beam width in a vertical direction is 15°. In this way, the horizontal beam width and the vertical beam width can be separately controlled. Therefore, more degrees of freedom of adjustment and control of the beam width are obtained.

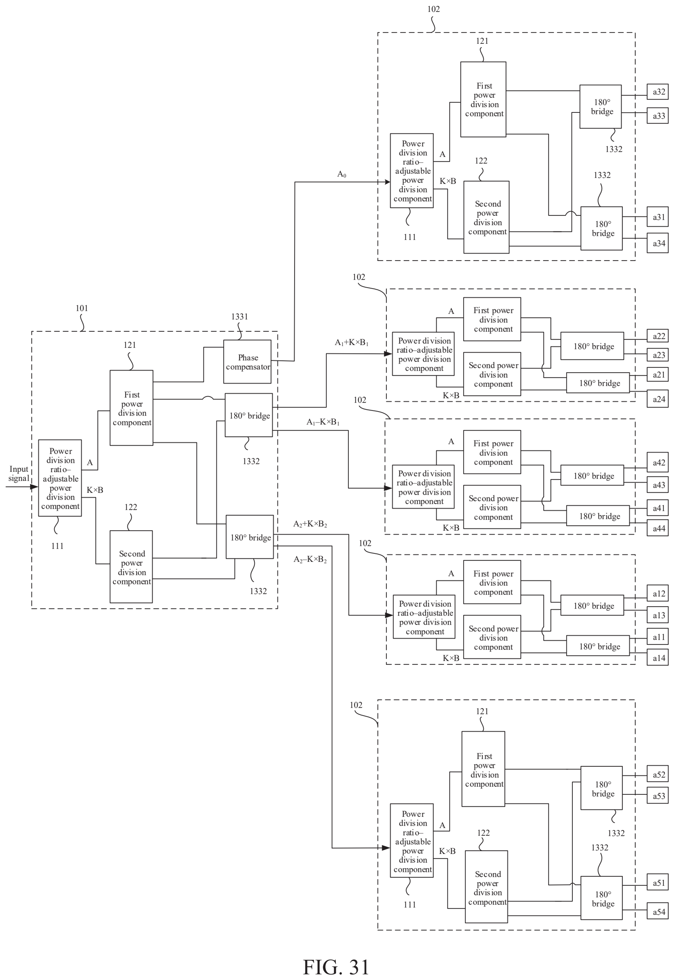

In another example, an antenna array 200 whose quantity of row elements is an odd number and whose quantity of column elements is an even number is used as an example for description. As shown in FIG. 30, a 5×4 antenna array 200 is used as an example. A quantity of row elements of the antenna array 200 is 5, a quantity of column elements is 4, and a total of 20 radiating elements are included. A distance between the radiating elements may be 80 mm, or certainly may be another value. A feeding system needs to output 20 output signals in total. Therefore, as shown in FIG. 31, a first-stage feeding network 101 may first perform row power division on an input signal once, to implement one-to-five row power division control. Then, a second-stage feeding network 102 performs column power division (one-to-four) control on each row.

As shown in FIG. 36, the feeding system includes the first-stage feeding network 101 and five second-stage feeding networks 102. For the first-stage feeding network 101, N = 5. It can be learned from the foregoing embodiments and the description corresponding to FIG. 4 that amplitudes of five output signals output by the first-stage feeding network 101 are respectively $A_2 + K \times B_2$, $A_1 + K \times B_1$, $A_0$, $A_1 - K \times B_1$, and $A_2 - K \times B_2$. The five output signals output by the first-stage feeding network 101 are respectively transmitted to the five second-stage feeding networks 102. For example, $A_0$ is transmitted to a first second-stage feeding network 102, $A_1 + K \times B_1$ is transmitted to a second second-stage feeding network 102, $A_1 - K \times B_1$ is transmitted to a third second-stage feeding network 102, $A_2 + K \times B_2$ is transmitted to a fourth second-stage feeding network 102, and $A_2 - K \times B_2$ is transmitted to a fifth second-stage feeding network 102.

For the second-stage feeding network 102, a quantity of column elements is 4, that is, N = 4. For column power division performed by each second-stage feeding network 102, refer to the foregoing embodiments and the power division corresponding to a case in which N is an even number in FIG. 5. Each second-stage feeding network 102 may output four output signals. Finally, the five second-stage feeding networks 102 output 20 output signals. The 20 output signals output by the second-stage feeding networks 102 and a correspondence between the 20 output signals and the 20 radiating elements are shown in FIG. 31 and Table 5:

Table 5

| a11 | a12 | a13 | a14 |
|---|---|---|---|
| $(A_2+K\times B_2) \times (A_2+K \times B_2)$ | $(A_2+K\times B_2) \times (A_1+K \times B_1)$ | $(A_2+K\times B_2) \times (A_1-K\times B_1)$ | $(A_2+K\times B_2) \times (A_2-K\times B_2)$ |
| a21 | a22 | a23 | a24 |
| $(A_1+K\times B1) \times (A_2+K \times B_2)$ | $(A_1+K\times B_1) \times (A_1+K \times B_1)$ | $(A_1+K\times B_1) \times (A_1-K\times B_1)$ | $(A_1+K\times B_1) \times (A_2-K\times B_2)$ |
| a31 | a32 | a33 | a34 |
| $A_0\times (A_2+K\times B_2)$ | $A_0\times (A_1+K\times B_1)$ | $A_0\times (A_1-K\times B_1)$ | $A_0\times (A_2-K\times B_2)$ |
| a41 | a42 | a43 | a44 |
| $(A_1-K\times B_1) \times (A_2+K\times B_2)$ | $(A_1-K\times B_1) \times (A_1+K\times B_1)$ | $(A_1-K\times B_1) \times (A_1-K\times B_1)$ | $(A_1-K\times B_1) \times (A_2-K\times B_2)$ |
| a51 | a52 | a53 | a54 |
| $(A_2-K\times B_2) \times (A_2+K\times B_2)$ | $(A_2-K\times B_2) \times (A_1+K\times B_1)$ | $(A_2-K\times B_2) \times (A_1-K\times B_1)$ | $(A_2-K\times B_2) \times (A_2-K\times B_2)$ |

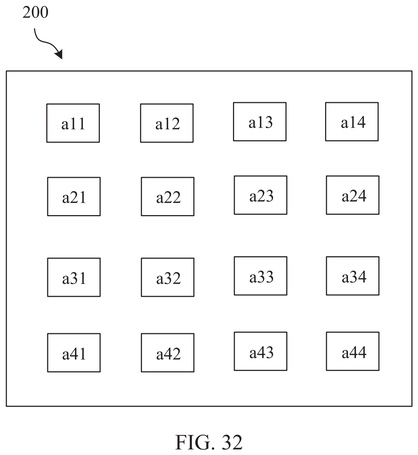

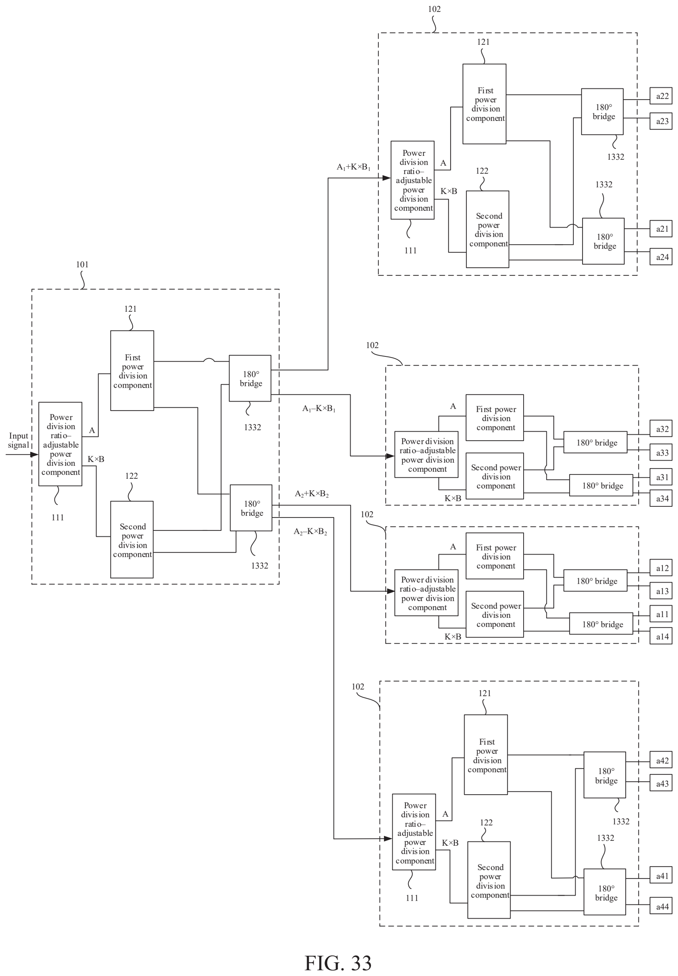

In another example, an antenna array 200 whose quantity of row elements is an even number and whose quantity of column elements is an even number is used as an example for description. As shown in FIG. 32, a 4×4 antenna array 200 is used as an example. A quantity of row elements of the antenna array 200 is 4, a quantity of column elements is also 4, and a total of 16 radiating elements are included. A distance between the radiating elements may be 80 mm, or certainly may be another value. A feeding system needs to output 16 output signals in total. Therefore, as shown in FIG. 33, a first-stage feeding network 101 may first perform row power division on an input signal once, to implement one-to-four row power division control. Then, a second-stage feeding network 102 performs column power division (one-to-four) control on each row.

As shown in FIG. 38, the feeding system includes the first-stage feeding network 101 and four second-stage feeding networks 102. For the first-stage feeding network 101, N = 4. According to the foregoing embodiments and the power division corresponding to a case in which N is an even number in FIG. 5, amplitudes of four output signals output by the first-stage feeding network 101 are respectively $A_2 + K \times B_2$, $A_1 + K \times B_1$, $A_1 - K \times B_1$, and $A_2 - K \times B_2$. The four output signals output by the first-stage feeding network 101 are respectively transmitted to the four second-stage feeding networks 102.

For the second-stage feeding network 102, a quantity of column elements is 4, that is, N = 4. For column power division performed by each second-stage feeding network 102, refer to the foregoing embodiments and the power division corresponding to a case in which N is an even number in FIG. 5. Each second-stage feeding network 102 may output four output signals. Finally, the four second-stage feeding networks 102 output 16 output signals. The 16 output signals output by the second-stage feeding networks 102 and a correspondence between the 16 output signals and the 16 radiating elements are shown in FIG. 33 and Table 6:

Table 6

| a11 | a12 | a13 | a14 |
|---|---|---|---|
| $(A_2+K\times B_2) \times (A_2+K \times B_2)$ | $(A_2+K\times B_2) \times (A_1+K \times B_1)$ | $(A_2+K\times B_2) \times (A_1-K\times B_1)$ | $(A_2+K\times B_2) \times (A_2-K\times B_2)$ |
| a21 | a22 | a23 | a24 |
| $(A_1+K\times B_1) \times (A_2+K \times B_2)$ | $(A_1+K\times B_1) \times (A_1+K \times B_1)$ | $(A1+K\times B_1) \times (A_1-K\times B_1)$ | $(A_1+K\times B_1) \times (A_2-K\times B_2)$ |
| a31 | a32 | a33 | a34 |
| $(A_1-K\times B_1) \times (A_2+K\times B_2)$ | $(A_1-K\times B_1) \times (A_1+K\times B_1)$ | $(A_1-K\times B_1) \times (A_1-K\times B_1)$ | $(A_1-K\times B_1) \times (A_2-K\times B_2)$ |
| a41 | a42 | a43 | a44 |
| $(A_2-K\times B_2) \times (A_2+K\times B_2)$ | $(A_2-K\times B_2) \times (A_1+K\times B_1)$ | $(A_2-K\times B_2) \times (A_1-K\times B_1)$ | $(A_2-K\times B_2) \times (A_2-K\times B_2)$ |

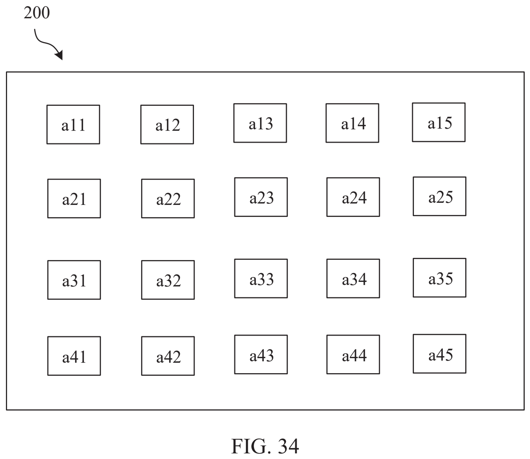

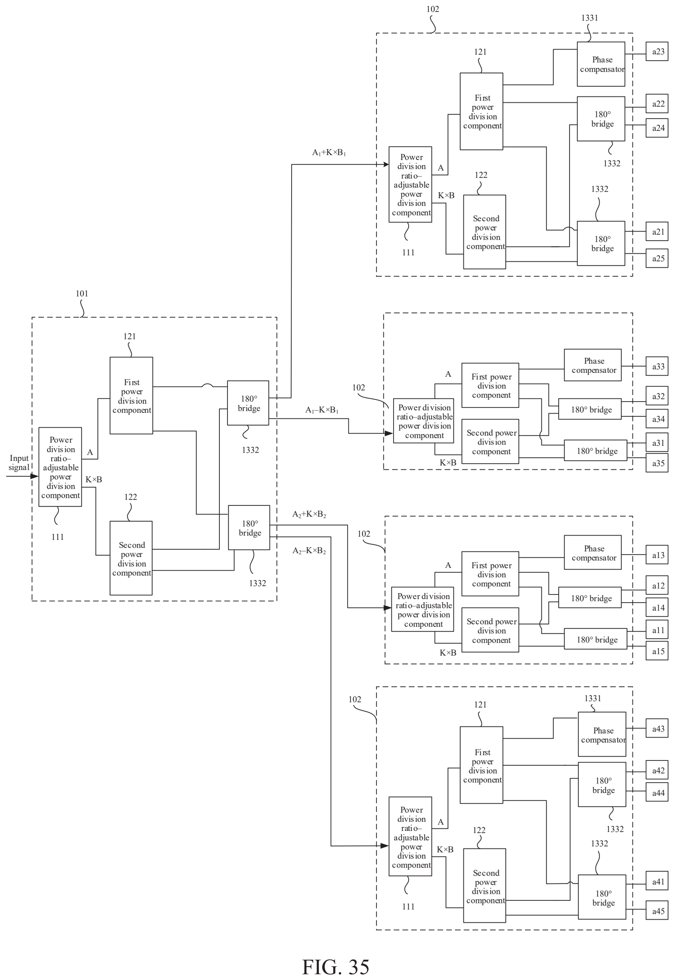

In another example, an antenna array 200 whose quantity of row elements is an even number and whose quantity of column elements is an odd number is used as an example for description. As shown in FIG. 34, a 4×5 antenna array 200 is used as an example. A quantity of row elements of the antenna array 200 is 4, a quantity of column elements is 5, and a total of 20 radiating elements are included. A distance between the radiating elements may be 80 mm, or certainly may be another value. A feeding system needs to output 20 output signals in total. Therefore, as shown in FIG. 35, a first-stage feeding network 101 may first perform row power division on an input signal once, to implement one-to-four row power division control. Then, a second-stage feeding network 102 performs column power division (one-to-five) control on each row.

As shown in FIG. 35, the feeding system includes the first-stage feeding network 101 and four second-stage feeding networks 102. For the first-stage feeding network 101, N = 4. According to the foregoing embodiments and the power division corresponding to a case in which N is an even number in FIG. 5, amplitudes of four output signals output by the first-stage feeding network 101 are respectively $A_2 + K \times B_2$, $A_1 + K \times B_1$, $A_1 - K \times B_1$, and $A_2 - K \times B_2$. The four output signals output by the first-stage feeding network 101 are respectively transmitted to the four second-stage feeding networks 102.

For the second-stage feeding network 102, a quantity of column elements is 5, that is, N = 5. For column power division performed by each second-stage feeding network 102, refer to the foregoing embodiments and the power division corresponding to a case in which N is an odd number in FIG. 4. Each second-stage feeding network 102 may output five output signals. Finally, the four second-stage feeding networks 102 output 20 output signals. The 20 output signals output by the second-stage feeding networks 102 and a correspondence between the 20 output signals and the 20 radiating elements are shown in FIG. 35 and Table 7:

Table 7

| a11 | a12 | a13 | a14 | a15 |
|---|---|---|---|---|
| $(A_2+K \times B_2) \times (A_2 +K \times B_2)$ | $(A_2+K \times B_2) \times (A_1 +K \times B_1)$ | $(A_2+K \times B_2) \times A_0$ | $(A_2+K \times B_2) \times (A_1-K \times B_1)$ | $(A_2+K \times B_2) \times (A_2-K \times B_2)$ |
| a21 | a22 | a23 | a24 | a25 |
| $(A_1+K^x B1) \times (A_2 +K \times B_2)$ | $(A_1+K \times B_1) \times (A_1 +K \times B_1)$ | $(A_1+K \times B_1) \times A_0$ | $(A_1+K \times B_1) \times (A_1-K \times B_1)$ | $(A_1+K \times B_1) \times (A_2-K \times B_2)$ |
| a31 | a32 | a33 | a34 | a35 |
| $(A_1-K \times B_1) \times (A_2+K \times B_2)$ | $(A_1-K \times B_1) \times (A_1+K \times B_1)$ | $(A_1-K \times B_1) \times A_0$ | $(A_1-K \times B_1) \times (A_1-K \times B_1)$ | $(A_1-K \times B_1) \times (A_2-K \times B_2)$ |
| a41 | a42 | a43 | a44 | a45 |
| $(A_2-K \times B_2) \times (A_2+K \times B_2)$ | $(A_2-K \times B_2) \times (A_1+K \times B_1)$ | $(A_2-K \times B_2) \times A_0$ | $(A_2-K \times B_2) \times (A_1-K \times B_1)$ | $(A_2-K \times B_2) \times (A_2-K \times B_2)$ |

It can be learned from the foregoing examples that a quantity of output signals output by the first-stage feeding network 101 is the same as a quantity of the second-stage feeding networks 102. For example, if the first-stage feeding network 101 outputs five output signals, five second-stage feeding networks 102 are required. When the first-stage feeding network 101 outputs four output signals, four second-stage feeding networks 102 are required, and each second-stage feeding network 102 receives one output signal of the first-stage feeding network 101.

In an embodiment of this application, a communication device is further provided and may include an antenna device and a radio frequency module. The antenna device and the radio frequency module may be connected by a transmission line. The transmission line may be a cable or a microstrip line. The radio frequency module may be a remote radio unit (remote radio unit, RRU).

The antenna device includes an antenna array 200 and the feeding system in the foregoing embodiments, an input end of the feeding system is electrically connected to the radio frequency module by a transmission line, and an output end of the feeding system is electrically connected to each radiating element in the antenna array 200. By using the foregoing feeding system, adjustment of a feeding signal of each radiating element in the antenna array 200 is implemented, making a range of adjustment and control of a beam width larger, and making sidelobe suppression and roll-off control more refined. In addition, when the feeding system includes two stages of feeding networks, through the two stages of networks, beams in two dimensions of a horizontal plane and a vertical plane are reconfigurable and can be controlled together or separately, thereby obtaining more degrees of freedom of beam adjustment and control.

The communication device provided in an embodiment of this application may be a base station antenna or a wireless local area network (wireless local area network, WLAN) antenna. During application, the communication device may be an antenna of an indoor venue, such as a stadium, a high-speed railway station, or a small indoor station of an airport, or may be an enterprise-level WLAN antenna. Because these antennas have a high-density layout requirement, these antennas pose a high challenge to a beam width, a sidelobe, and roll-off. In embodiments of this application, a characteristic of an adjustable beam width can be obtained in a case that characteristics such as sidelobe suppression and roll-off of these antennas are met.

In descriptions of embodiments of this application, it should be noted that, unless otherwise clearly specified and limited, the term "mounting", "interconnection", or "connection" should be understood in a broad sense, for example, may be a fixed connection, or may be an indirect interconnection through an intermediate medium, or may be an internal communication between two elements or an interaction relationship between two elements. A person of ordinary skill in the art may understand specific meanings of the foregoing terms in embodiments of this application based on specific cases.

In embodiments of this application, it is implied that an apparatus or element in question needs to have a particular orientation or needs to be constructed and operated in a particular orientation, and therefore cannot be construed as a limitation on embodiments of this application. In the description of embodiments of this application, unless otherwise exactly and specifically ruled, "plurality of" means two or more than two.

In the specification, claims, and accompanying drawings of embodiments of this application, the terms "first", "second", "third", "fourth", and the like (if any) are intended to distinguish between similar objects but do not necessarily indicate a specific order or sequence. It should be understood that the data termed in such a way are interchangeable in proper circumstances, so that embodiments of this application described herein can be implemented in other orders than the orders illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The term "plurality of" in this specification means two or more. The term "and/or" in this specification describes only an association relationship between associated objects and indicates that three relationships may exist. For example, A and/or B may indicate the following three cases: Only A exists, both A and B exist, and only B exists. In addition, the character "/" in this specification usually indicates an "or" relationship between associated objects, and the character "/" in formulas indicates a "division" relationship between associated objects.

It may be understood that various numbers in embodiments of this application are merely used for differentiation for ease of description, and are not used to limit the scope of embodiments of this application.

It may be understood that, in embodiments of this application, sequence numbers of the foregoing processes do not mean an execution sequence. The execution sequence of the processes should be determined based on functions and internal logic of the processes, and should not be construed as any limitation on the implementation processes of embodiments of this application.

## Claims

1. An antenna array feeding network, comprising:

    a power division ratio-adjustable power division component, wherein the power division ratio-adjustable power division component has a first output port, a second output port, and an input port for receiving an input signal, and an amplitude ratio of a signal output from the first output port to a signal output from the second output port is adjustable;

    a first power division component, wherein an input end of the first power division component is electrically connected to the first output port, and the first power division component is configured to divide a signal received from the first output port into X first beam signals and transmit the X first beam signals to the hybrid component respectively through X output ports, wherein X is an integer greater than or equal to 1;

    a second power division component, wherein an input end of the second power division component is electrically connected to the second output port, and the second power division component is configured to divide a signal received from the second output port into Y second beam signals and transmit the Y second beam signals to the hybrid component respectively through Y output ports, wherein Y is also an integer greater than or equal to 1; and

    the hybrid component, wherein an input end of the hybrid component is electrically connected to both an output end of the first power division component and an output end of the second power division component, an output end of the hybrid component is configured to be electrically connected to an antenna array, and the hybrid component is configured to at least partially mix the X first beam signals and the Y second beam signals, and output a mixed signal to the antenna array.

2. The antenna array feeding network according to claim 1, wherein the hybrid component is configured to mix the X first beam signals and the Y second beam signals, and output N output signals, wherein N is a quantity of elements of the antenna array, and $N \geq 2$;

    when N is an even number, X, Y, and N meet the following formula:

$$X = Y = N/2;$$

when N is an odd number, X, Y, and N meet the following formulas:

$$X = (N + 1)/2;$$

$$Y = (N - 1)/2.$$

3. The antenna array feeding network according to claim 2, wherein the hybrid component comprises at least one 180° bridge, and each 180° bridge has a sum input port and a difference input port; and
at least some of the X first beam signals are separately connected to the sum input port of the at least one 180° bridge, and the Y second beam signals are separately connected to the difference input port of the at least one 180° bridge.

4. The antenna array feeding network according to claim 3, wherein N is an even number, and the hybrid component comprises N/2 180° bridges disposed in parallel; and
the X first beam signals are respectively connected to sum input ports of the N/2 180° bridges, and the Y second beam signals are respectively connected to difference input ports of the N/2 180° bridges.

5. The antenna array feeding network according to claim 3, wherein N is an odd number, the hybrid component comprises a phase compensator and (N-1)/2 180° bridges disposed in parallel, and the phase compensator and the 180° bridges are disposed in parallel;

an input end of the phase compensator is electrically connected to one of the output ports of the first power division component, an output end of the phase compensator is electrically connected to one radiating element in the antenna array, and the phase compensator is configured to perform phase compensation on one of the X first beam signals and output the first beam signal to the radiating element; and
remaining (N-1)/2 signals of the X first beam signals are respectively connected to sum input ports of the (N-1)/2 180° bridges, and the Y second beam signals are respectively connected to difference input ports of the (N-1)/2 180° bridges.

6. The antenna array feeding network according to any one of claims 2 to 5, wherein the power division ratio-adjustable power division component is configured to divide the input signal into a first beam component and a second beam component, the first output port is configured to output the first beam component, and the second output port is configured to output the second beam component; and a signal amplitude ratio of the first beam component to the second beam component meets the following formula:

$$|A|:|K \times B|,$$

wherein
K is an amplitude ratio regulation factor of the power division ratio-adjustable power division component, K is greater than or equal to 0, A is a first beam vector, and B is a second beam vector; and |A| is a signal amplitude of the first beam vector, and |B| is a signal amplitude of the second beam vector.

7. The antenna array feeding network according to claim 6, wherein the first power division component is a fixed power divider with a fixed amplitude ratio regulation factor;

when N is an odd number, the first beam vector $A = [A_0, \ \sqrt{2}A_1, \ \sqrt{2}A_2, \ ..., \ \sqrt{2}A_{\frac{N-1}{2}}]$, and an amplitude ratio of the X first beam signals is $A_0:\sqrt{2}A_1:\sqrt{2}A_2:...:\sqrt{2}A_{\frac{N-1}{2}}$;

when N is an even number, the first beam vector $A = [\sqrt{2}A_1, \ \sqrt{2}A_2, \ ..., \ \sqrt{2}A_{\frac{N}{2}}]$, and an amplitude ratio of the X first beam signals is $\sqrt{2}A_1:\sqrt{2}A_2:...:\sqrt{2}A_{\frac{N}{2}}$; and

$A_0, A_1, A_2, ...,$ $A_{\frac{N-1}{2}}$, and $A_{\frac{N}{2}}$ are elements of the first beam vector.

8. The antenna array feeding network according to claim 6, wherein the first power division component is a power divider with an adjustable amplitude ratio regulation factor; and
the first power division component comprises one or more power dividers, and the one or more power dividers are all adjustable power dividers.

9. The antenna array feeding network according to any one of claims 4 to 7, wherein the second power division component is a fixed power divider with a fixed amplitude ratio regulation factor;

when N is an odd number, the second beam vector $B = [\sqrt{2}B_1, \; \sqrt{2}B_2, \; ..., \; \sqrt{2}B_{\frac{N-1}{2}}]$, and an amplitude ratio of the Y second beam signals is $\sqrt{2}K \times B_1 : \sqrt{2}K \times B_2 : ... : \sqrt{2}K \times B_{\frac{N-1}{2}}$;

when N is an even number, the second beam vector $B = [\sqrt{2}B_1, \; \sqrt{2}B_2, \; ..., \; \sqrt{2}B_{\frac{N}{2}}]$, and an amplitude ratio of the Y second beam signals is $\sqrt{2}K \times B_1 : \sqrt{2}K \times B_2 : ... : \sqrt{2}K \times B_{\frac{N}{2}}$; and

$B_1, B_2, ...,$ $B_{\frac{N-1}{2}}$, and $B_{\frac{N}{2}}$ are elements of the second beam vector.

10. The antenna array feeding network according to any one of claims 4 to 7, wherein the second power division component is a power divider with an adjustable amplitude ratio regulation factor; and
the second power division component comprises one or more power dividers, and the one or more power dividers are all adjustable power dividers.

11. The antenna array feeding network according to claim 7 or 9, wherein

when N is an odd number, an amplitude ratio of the N output signals is
$$A_0 : (A_1 + K \times B_1) : (A_1 - K \times B_1) : ... : (A_{\frac{N-1}{2}} + K \times B_{\frac{N-1}{2}}) : (A_1 + A_{\frac{N-1}{2}} - K \times B_{\frac{N-1}{2}}) ; \text{ or}$$
when N is an even number, an amplitude ratio of the N output signals is
$$( A_1 + K \times B_1) : (A_1 - K \times B_1) : ... : (A_{\frac{N}{2}} + K \times B_{\frac{N}{2}}) : (A_{\frac{N}{2}} - K \times B_{\frac{N}{2}}) .$$

12. The antenna array feeding network according to any one of claims 1 to 11, wherein the power division ratio-adjustable power division component comprises a power divider, an adjustable phase shifter, and a 90° bridge;

one output port of the power divider is connected to one input port of the 90° bridge; and
the other output port of the power divider is connected to an input port of the adjustable phase shifter, and an output port of the adjustable phase shifter is connected to the other input port of the 90° bridge.

13. The antenna array feeding network according to any one of claims 1 to 11, wherein the power division ratio-adjustable power division component comprises a power divider, a 90° phase shifter, an adjustable phase shifter, and a 90° bridge;

one output port of the power divider is connected to one input port of the 90° bridge; and
the other output port of the power divider is connected to an input port of the 90° phase shifter, an output port of the 90° phase shifter is connected to an input port of the adjustable phase shifter, and an output port of the adjustable phase shifter is connected to the other input port of the 90° bridge.

14. The antenna array feeding network according to any one of claims 1 to 11, wherein the power division ratio-adjustable power division component comprises two 90° bridges and an adjustable phase shifter;

one output port of one 90° bridge of the two 90° bridges is connected to one input port of the other 90° bridge of the two 90° bridges; and

the other output port of the one 90° bridge is connected to the other input port of the other 90° bridge by the adjustable phase shifter.

15. The antenna array feeding network according to any one of claims 1 to 11, wherein the power division ratio-adjustable power division component comprises a first circuit board and a slidable second circuit board that are stacked, a first metal layer is disposed on the first circuit board, an end of the first metal layer has the input port, the first output port and the second output port that are connected in parallel are formed on the first metal layer, an end at which the first output port is provided on the first metal layer has a first coupling gap, and an end at which the second output port is provided on the first metal layer has a second coupling gap;

a second metal layer and a third metal layer are disposed on a surface that is of the second circuit board and that faces the first metal layer; and

when the second circuit board slides toward the first output port, the second metal layer corresponds to the first coupling gap, and the third metal layer corresponds to the second coupling gap.

16. The antenna array feeding network according to claim 15, wherein the third metal layer comprises a plurality of first strip lines with different widths, and the second metal layer comprises a plurality of second strip lines with different widths.

17. A feeding system, comprising a first-stage feeding network, wherein the antenna array feeding network according to any one of claims 1 to 16 is used as the first-stage feeding network; and

an output end of the first-stage feeding network is configured to be electrically connected to a corresponding radiating element in an antenna array.

18. The feeding system according to claim 17, further comprising a plurality of second-stage feeding networks, wherein the antenna array feeding network according to any one of claims 1 to 16 is used as each second-stage feeding network;

the plurality of second-stage feeding networks are disposed in parallel, and each second-stage feeding network and the first-stage feeding network are connected in series;

an output end of the second-stage feeding network is configured to be electrically connected to a corresponding radiating element in the antenna array; and

a quantity of output signals output by the first-stage feeding network is the same as a quantity of rows of the antenna array, and a quantity of output signals output by each second-stage feeding network is the same as a quantity of columns of the antenna array.

19. The antenna array feeding system according to claim 18, wherein the quantity of output signals output by the first-stage feeding network is the same as a quantity of the second-stage feeding networks, and an input end of each second-stage feeding network is in a communication connection with one output signal of the first-stage feeding network.

20. The antenna array feeding system according to claim 18 or 19, wherein an amplitude ratio regulation factor of a power division ratio-adjustable power division component in the first-stage feeding network is the same as an amplitude ratio regulation factor of a power division ratio-adjustable power division component in the second-stage feeding network, or an amplitude ratio regulation factor of a power division ratio-adjustable power division component in the first-stage feeding network is different from an amplitude ratio regulation factor of a power division ratio-adjustable power division component in the second-stage feeding network.

21. A communication device, comprising an antenna device and a radio frequency module, wherein the radio frequency module is connected to the antenna device by a transmission line; and

the antenna device comprises an antenna array and the feeding system according to any one of claims 17 to 20, an input end of the feeding system is electrically connected to the radio frequency module by a transmission line, and an output end of the feeding system is electrically connected to each radiating element in the antenna array.

22. The feeding system according to claim 21, wherein when the antenna array is a linear array, the output end of the first-stage feeding network in the feeding system is electrically connected to each radiating element in the antenna array.

**23.** The feeding system according to claim 21, wherein when the antenna array is a rectangular array, the first-stage feeding network of the feeding system and each second-stage feeding network are connected in series; and
the output end of each second-stage feeding network is electrically connected to each radiating element in the antenna array.

100

Input signal → Power division ratio–adjustable power division component
111

A → First power division component
121
122

K×B → Second power division component

Hybrid component
131

200

Antenna array

FIG. 1

FIG. 2

200

a1  a2  a3  a4  a5

FIG. 3

FIG. 4

FIG. 5

FIG. 6

EP 4 683 115 A1

FIG. 7

111

1112

Power divider — Adjustable phase shifter — 90° bridge

1115

1111

FIG. 8

111

b

a

90° bridge

1116

1111

FIG. 9

111

c

90° bridge

1116　　　　1111

FIG. 10

111　　　　　　　　　　　　　　　　1111

Power
divider

90° phase
shifter

Adjustable
phase
shifter

90° bridge

1115　　　　1113　　　　　　1112

FIG. 11

FIG. 12

FIG. 13

FIG. 14

FIG. 15

111

111a

111c

111c

111d

111b

FIG. 16

111c (A)

P3

111f

1/4λ

P1

111d

111g

Capacitive coupling

111e (B)

P2

FIG. 17

FIG. 18

FIG. 19

FIG. 20

EP 4 683 115 A1

EP 4 683 115 A1

200

| a1 | a2 | a3 | a4 | a5 | a6 | a7 |

FIG. 21

41

FIG. 22

FIG. 23

200

| a1 | a2 | a3 | a4 | a5 | a6 | a7 | a8 |

FIG. 24

EP 4 683 115 A1

FIG. 25

100 (101)　　　　　　　　　　　　　　　　　　200

Input
signal → | Power division ratio–adjustable power division component | —A→ | First power division component | → | Hybrid unit | → | Antenna array |

| Power division ratio–adjustable power division component | —K×B→ | Second power division component |

122　　　121

111　　　　　131

FIG. 26

FIG. 27

EP 4 683 115 A1

200

| a11 | a12 | a13 | a14 | a15 |
| a21 | a22 | a23 | a24 | a25 |
| a31 | a32 | a33 | a34 | a35 |
| a41 | a42 | a43 | a44 | a45 |
| a51 | a52 | a53 | a54 | a55 |

FIG. 28

FIG. 29

200

FIG. 30

FIG. 31

200

| | | | |
|---|---|---|---|
| a11 | a12 | a13 | a14 |
| a21 | a22 | a23 | a24 |
| a31 | a32 | a33 | a34 |
| a41 | a42 | a43 | a44 |

FIG. 32

FIG. 33

200

FIG. 34

FIG. 35

## INTERNATIONAL SEARCH REPORT

| International application No. |
| --- |
| **PCT/CN2024/090085** |

| A. | CLASSIFICATION OF SUBJECT MATTER |
| --- | --- |
| | H01Q3/28(2006.01)i; H01Q21/30(2006.01)i |

According to International Patent Classification (IPC) or to both national classification and IPC

| B. | FIELDS SEARCHED |
| --- | --- |

Minimum documentation searched (classification system followed by classification symbols)

IPC: H01Q

Documentation searched other than minimum documentation to the extent that such documents are included in the fields searched

Electronic data base consulted during the international search (name of data base and, where practicable, search terms used)

VEN: CNABS; CNTXT; USTXT; EPTXT; WOTXT; CNKI; IEEE: 天线, 阵, 馈电网络, 馈电系统, 功分, 功率分配, 波束, 可调, 可控, 可变, antenna, array, feeding network, feeding system, divider, distributor, beam, variable, adjust+, control+, tun+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 5151706 A (AGENCE SPATIALE EUROPEENE) 29 September 1992 (1992-09-29) description, column 2, lines 1-57, and figure 1 | 1-23 |
| A | CN 207116706 U (SHANGHAI HUIJUE NETWORK COMMUNICATION EQUIPMENT CO., LTD.) 16 March 2018 (2018-03-16) entire document | 1-23 |
| A | CN 114171916 A (ROSENBERGER TECHNOLOGIES CO., LTD.) 11 March 2022 (2022-03-11) entire document | 1-23 |
| A | CN 102907168 A (HUAWEI TECHNOLOGIES CO., LTD.) 30 January 2013 (2013-01-30) entire document | 1-23 |
| A | CN 104718661 A (ALCATEL LUCENT) 17 June 2015 (2015-06-17) entire document | 1-23 |
| A | CN 114374091 A (THE 54TH RESEARCH INSTITUTE OF CHINA ELECTRONICS TECHNOLOGY GROUP CORPORATION) 19 April 2022 (2022-04-19) entire document | 1-23 |

| ☐ Further documents are listed in the continuation of Box C. | ☑ See patent family annex. |
| --- | --- |

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **31 July 2024** | **31 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/090085**

| Patent document cited in search report | | | Publication date (day/month/year) | Patent family member(s) | | | Publication date (day/month/year) |
|---|---|---|---|---|---|---|---|
| US | 5151706 | A | 29 September 1992 | CA | 2059584 | A1 | 01 August 1992 |
| | | | | CA | 2059584 | C | 05 September 1995 |
| | | | | FR | 2672436 | A1 | 07 August 1992 |
| | | | | FR | 2672436 | B1 | 10 September 1993 |
| | | | | JPH | 04319804 | A | 10 November 1992 |
| | | | | JP | 2607198 | B2 | 07 May 1997 |
| | | | | DE | 69200720 | D1 | 12 January 1995 |
| | | | | DE | 69200720 | T2 | 06 April 1995 |
| | | | | EP | 0497652 | A1 | 05 August 1992 |
| | | | | EP | 0497652 | B1 | 30 November 1994 |
| CN | 207116706 | U | 16 March 2018 | | None | | |
| CN | 114171916 | A | 11 March 2022 | | None | | |
| CN | 102907168 | A | 30 January 2013 | EP | 2860822 | A1 | 15 April 2015 |
| | | | | EP | 2860822 | A4 | 17 June 2015 |
| | | | | EP | 2860822 | B1 | 12 April 2017 |
| | | | | US | 2015098495 | A1 | 09 April 2015 |
| | | | | US | 9049083 | B2 | 02 June 2015 |
| | | | | WO | 2013185281 | A1 | 19 December 2013 |
| CN | 104718661 | A | 17 June 2015 | EP | 2698870 | A1 | 19 February 2014 |
| | | | | KR | 20150041140 | A | 15 April 2015 |
| | | | | KR | 101669775 | B1 | 27 October 2016 |
| | | | | JP | 2015533030 | A | 16 November 2015 |
| | | | | JP | 6009079 | B2 | 19 October 2016 |
| | | | | US | 2015200455 | A1 | 16 July 2015 |
| | | | | WO | 2014026739 | A1 | 20 February 2014 |
| CN | 114374091 | A | 19 April 2022 | | None | | |

Form PCT/ISA/210 (patent family annex) (July 2022)

**EP 4 683 115 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310493146